# EUROPEAN PATENT SPECIFICATION

(11) **EP 3 391 640 B1**
(45) Date of publication and mention of the grant of the patent: **11.09.2024**
(21) Application number: 16810084.0
(22) Date of filing: 28.11.2016
(51) Int. Cl.: H04N 5/77, H04N 19/597, H04N 13/232

(54) **DATA RECORDING APPARATUS, IMAGE CAPTURING APPARATUS, DATA RECORDING METHOD, AND STORAGE MEDIUM**
DATENAUFZEICHNUNGSVORRICHTUNG, BILDERFASSUNGSVORRICHTUNG, DATENAUFZEICHNUNGSVERFAHREN UND SPEICHERMEDIUM
APPAREIL D'ENREGISTREMENT DE DONNÉES, APPAREIL DE CAPTURE D'IMAGE, PROCÉDÉ D'ENREGISTREMENT DE DONNÉES ET SUPPORT DE STOCKAGE

(30) Priority: 17.12.2015 JP 2015246229
(43) Date of publication of application: 24.10.2018
(73) Proprietor: Canon Kabushiki Kaisha, Tokyo 146-8501 (JP)
(72) Inventor: KITAGO, Masaki, Tokyo 146-8501 (JP)
(74) Representative: TBK
(86) International application number: PCT/JP2016/004983
(87) International publication number: WO 2017/104111

(56) References cited:
- WO-A1-2014/204009
- JP-A- 2008 311 943
- US-A1- 2010 265 385
- US-A1- 2013 077 880
- US-A1- 2013 329 068
- AKIRA KUBOTA ET AL: "Reconstructing Dense Light Field From Array of Multifocus Images for Novel View Synthesis", IEEE TRANSACTIONS ON IMAGE PROCESSING, IEEE SERVICE CENTER, PISCATAWAY, NJ, US, vol. 16, no. 1, 1 January 2007 (2007-01-01), pages 269 - 279, XP011151951, ISSN: 1057-7149, DOI: 10.1109/TIP.2006.884938
- GEORGIEV TODOR ET AL: "The multifocus plenoptic camera", DIGITAL PHOTOGRAPHY VIII, SPIE, 1000 20TH ST. BELLINGHAM WA 98225-6705 USA, vol. 8299, no. 1, 22 January 2012 (2012-01-22), pages 1 - 11, XP060001264, DOI: 10.1117/12.908667

## Description

### [Technical Field]

The present invention relates to a technique to store image data of a plurality of focus positions and image data of a plurality of viewpoints. Particularly, the present invention relates to a technique to store image data obtained by performing image capturing using a multi-viewpoint image capturing apparatus, such as a camera array and a plenoptic camera.

### [Background Art]

In recent years, 3D contents are actively made use of mainly by the movie world. The development of the multi-viewpoint image capturing technique and the multi-viewpoint display technique is in progress for seeking an enhanced sense of realism.

For multi-viewpoint image capturing, an image capturing apparatus, such as a camera array, a plenoptic camera, and a camera array system, has been developed. With a multi-viewpoint image capturing apparatus, such as a camera array and a plenoptic camera, it is possible to acquire information called a light field representing the position of a light ray and angle information. By using the light field, it is possible to adjust the focus position after image capturing, to change the viewpoint position after image capturing, and to acquire the distance to a subject. The technique such as this is being actively studied in the field called computational photography.

Image data or additional data (e.g., distance data) obtained by performing image capturing using a camera array or a plenoptic camera is encoded and compressed to an appropriate amount of information. Further, the encoded image data or additional data is saved in accordance with a predetermined file format (hereinafter, simply referred to as format).

As a format to record a plurality of images, for example, there is Multi-Picture Format. The Multi-Picture Format is a format to record a plurality of still images in the same file and was established by the CIPA in 2009. The Multi-Picture Format is also made use of as an image capturing format of a 3D digital camera (stereo camera). In the case where the Multi-Picture Format is made use of, it is possible to store a plurality of pieces of image data in one file. In the Multi-Picture Format, each piece of image data is encoded by the JPEG. The kinds of image compatible with the Multi-Picture Format include a panorama image, a stereoscopic image, a multiangle image, etc.

Besides the above, a format to record an extended image file to store a plurality of pieces of image data obtained by performing image capturing from different viewpoints and a basic file to store image data obtained by processing the representative image data selected from among the plurality of pieces of image data in association with one another has been proposed (see JP 2008-311943 A).

The article entitled "Reconstructing Dense Light Field From Array of Multifocus Images for Novel View Synthesis" by A. Kubota et al., IEEE Transactions on Image Processing, vol. 16, no. 1, 1 January 2007, pages 269-279, ISSN: 1057-7149, XP011151951, presents a method for synthesizing a novel view from two sets of differently focused images taken by an aperture camera array for a scene consisting of two approximately constant depths, wherein this method can effectively create a dense array of pin-hole cameras (i.e. all-in-focus images). Further background art is known from the document WO 2014/204009 A1 which discloses an information processing apparatus for acquiring distance information from image data on subject, wherein when a plurality of images are obtained by using a plenoptic camera to calculate distance information, a method for calculating the distance information is selected; and the document US 2013/329068 A1 which discloses a camera for obtaining a plurality of images from multi-viewpoints to generate an image that is focused on an object of interest.

### [Summary of Invention]

In order to make it possible to make use of a plurality of pieces of image data obtained by performing image capturing using a camera array or a plenoptic camera for more purposes of use, it is important to record the image data in an appropriate format. Due to this, it is made possible to make use of the image data for various purposes of use, such as a change of viewpoint position, refocus, and adjustment of depth of field. Consequently, an object of the present invention is to make it possible to make use of a plurality of pieces of image data of different focus positions or different viewpoints obtained by performing image capturing for more purposes of use.

The present invention in its first aspect provides a data recording apparatus as specified in claims 1 to 4 .

The present invention in its second aspect provides an image capturing apparatus as specified in claim 5.

The present invention in its third aspect provides a data recording method as specified in claim 6.

The present invention in its fourth aspect provides a program as specified in claim 7.

According to the present invention, it is possible to make use of a plurality of pieces of image data of different focus positions or different viewpoints obtained by performing image capturing for more purposes of use.

Further features of the present invention will become apparent from the following description of exemplary embodiments (with reference to the attached drawings).

### [Brief Description of Drawings]

FIG. 1A is a diagram showing an outline of a camera array image capturing apparatus according to a first embodiment;
FIG. 1B is a diagram showing an outline of a plenoptic image capturing apparatus according to the first embodiment;
FIG. 2A is a diagram showing an example of an image of a top-left viewpoint;
FIG. 2B is a diagram showing an example of an image of a top-right viewpoint;
FIG. 2C is a diagram showing an example of an image of a bottom-left viewpoint;
FIG. 2D is a diagram showing an example of an image of a bottom-right viewpoint;
FIG. 3 is a diagram schematically showing a relationship between image data obtained by performing image capturing at a plurality of focus positions and from a plurality of viewpoints;
FIG. 4A is a diagram showing an internal configuration of a plenoptic image capturing unit;
FIG. 4B is a diagram showing an example of image data acquired by the plenoptic image capturing unit;
FIG. 4C is a diagram showing an example of image data of a top-left viewpoint which is generated from the image data shown in FIG. 4B;
FIG. 5 is a block diagram showing an example of an internal configuration of an image capturing apparatus;
FIG. 6A is a diagram showing an example of an image represented by distance data;
FIG. 6B is a diagram showing an example of an image represented by area division data;
FIG. 7A is a diagram showing an example of management information;
FIG. 7B is a diagram showing an example of a format according to the first embodiment;
FIG. 7C is a diagram showing another example of a format according to the first embodiment;
FIG. 8A is a diagram schematically showing data that is input to an additional information generation unit and data that is output from the additional information generation unit;
FIG. 8B is a diagram schematically showing data that is input to a free viewpoint image generation unit and data that is output from the free viewpoint image generation unit;
FIG. 8C is a diagram schematically showing data that is input to a free focus point image generation unit and data that is output from the free focus point image generation unit;
FIG. 8D is a diagram showing the positions and the ranges of depths of field of multi-viewpoint image data and a free focus point image in which a predetermined object is in focus;
FIG. 8E is a diagram showing the positions and the ranges of depths of field of multi-viewpoint image data and a free focus point image in which a predetermined object is in focus;
FIG. 9 is a block diagram showing an example of an internal configuration of an additional information generation unit;
FIG. 10 is a flowchart showing processing of a distance data generation unit;
FIG. 11A is a diagram showing an example of an image that is taken to be a base image in calculation of a base disparity;
FIG. 11B is a diagram showing an example of an image that is taken to be a reference image in calculation of a base disparity;
FIG. 11C is a diagram showing an example of an image that is taken to be a base image in calculation of a reference disparity;
FIG. 11D is a diagram showing an example of an image that is taken to be a reference image in calculation of a reference disparity;
FIG. 12 is a flowchart showing processing of an area division data generation unit;
FIG. 13A is a diagram showing an example of a rectangular area selected based on a user operation;
FIG. 13B is a diagram showing an example of a rectangular area selected based on a user operation;
FIG. 14 is a block diagram showing an example of an internal configuration of a free viewpoint image generation unit;
FIG. 15 is a flowchart showing processing of a separation information generation unit;
FIG. 16 is a diagram showing the way each pixel within a viewpoint image is classified into two kinds of pixel: a boundary pixel and a normal pixel;
FIG. 17A is a diagram for explaining a main layer;
FIG. 17B is a diagram for explaining a main layer;
FIG. 17C is a diagram for explaining a boundary layer;
FIG. 17D is a diagram for explaining a boundary layer;
FIG. 18 is a flowchart showing processing of a free viewpoint image combination unit;
FIG. 19A is a diagram showing the way a three-dimensional model of a main layer is generated;
FIG. 19B is a diagram showing the way rendering of a main layer is performed;
FIG. 19C is a diagram showing the way a three-dimensional model of a boundary layer is generated;
FIG. 19D is a diagram showing the way rendering of a boundary layer is performed;
FIG. 20 is a flowchart showing processing of a free focus point image generation unit according to the first embodiment;
FIG. 21A is a diagram showing an example of an image in which predetermined objects are in focus;
FIG. 21B is a diagram showing an example of an image in which predetermined objects are in focus;
FIG. 21C is a diagram showing an example of a free focus point image;
FIG. 21D is a diagram showing an example of a free focus point image;
FIG. 22A is a diagram showing an example of an image that is taken to be a base in shift addition according to the first embodiment;
FIG. 22B is a diagram showing an example of an image that is shifted in shift addition according to the first embodiment;
FIG. 23 is a diagram schematically showing data that is input and output by a free focus point image generation unit according to a second embodiment;
FIG. 24 is a flowchart showing processing of the free focus point image generation unit according to the second embodiment;
FIG. 25A is a diagram showing an example of an image that is taken to be a base image in shift addition according to the second embodiment; and
FIG. 25B is a diagram showing an example of an image that is shifted in shift addition according to the second embodiment.

### [Description of Embodiments]

In the following, with reference to the drawings, aspects for embodying the present invention are explained. The invention is defined by the appended claims.

### [First embodiment]

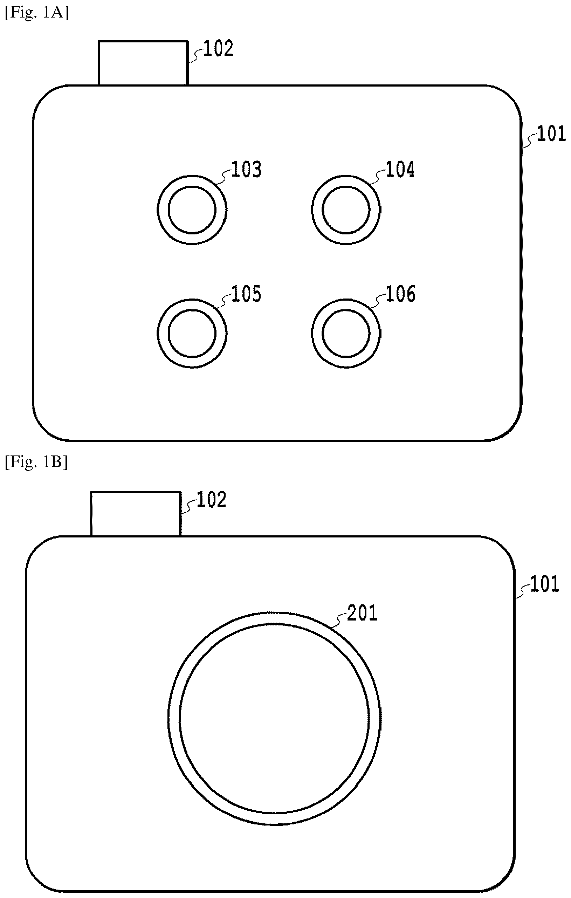

FIG. 1A and FIG. 1B are diagrams each showing an outline of an image capturing apparatus according to a first embodiment. FIG. 1A and FIG. 1B each show an example of an outline of a camera array image capturing apparatus including a plurality of image capturing units in the case where it is viewed from the front, and an example of an outline of a plenoptic image capturing apparatus in the case where it is viewed from the front.

First, the camera array image capturing apparatus including a plurality of image capturing units shown in FIG. 1A is explained.

As shown in FIG. 1A, an image capturing apparatus 101 includes a photographing button 102 on the top of a casing (upper side in FIG. 1A). Further, the image capturing apparatus 101 includes four image capturing units 103 to 106 configured to acquire image data on the front of the casing (front side in FIG. 1A). The four image capturing units all have the same focus length and are arranged in the form of a square grid. By a user pressing down the photographing button 102, image capturing processing is started.

First, a first focus position is set and the image capturing units 103 to 106 receive light information on a subject by a sensor (image capturing element). The received signal is subjected to A/D conversion and a plurality of pieces of image data is acquired at the same time. By the camera array such as this, it is possible to obtain an image data group (multi-viewpoint image data) obtained by performing image capturing of the same subject from a plurality of viewpoint positions.

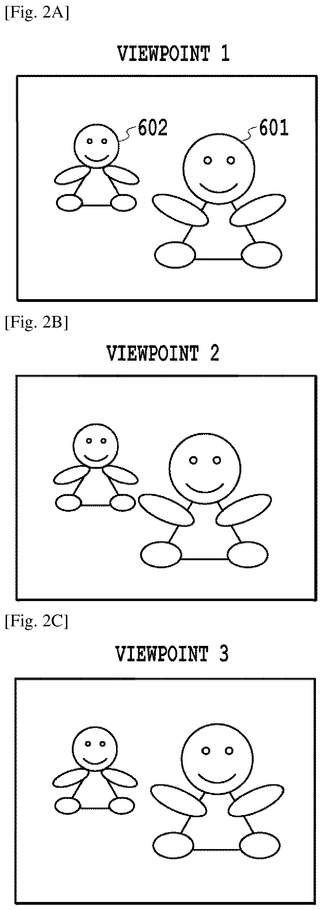

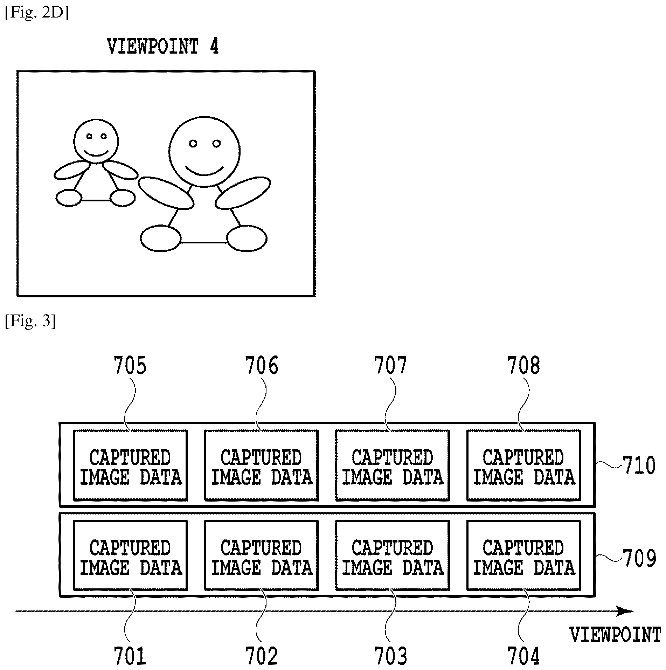

FIG. 2A to FIG. 2D are each a diagram showing an example of multi-viewpoint image data. In FIG. 2A, an image of a top-left viewpoint (viewpoint 1) captured by the image capturing unit 104 is shown. In FIG. 2B, an image of a top-right viewpoint (viewpoint 2) captured by the image capturing unit 103 is shown. In FIG. 2C, an image of a bottom-left viewpoint (viewpoint 3) captured by the image capturing unit 106 is shown. In FIG. 2D, an image of a bottom-right viewpoint (viewpoint 4) captured by the image capturing unit 105 is shown. From a comparison between the FIG. 2A to FIG. 2D, it is known that the positions of the objects in each image are different depending on the arrangement of the image capturing unit. Here, it is assumed that an object 601 is in focus.

Next, a second focus position different from the first focus position is set and multi-viewpoint image data is acquired again. At this time also, the image capturing units 103 to 106 similarly receive light information on a subject by a sensor. The received signal is subjected to A/D conversion and a plurality of pieces of image data is acquired at the same time. Here, it is assumed that an object 602 is in focus.

As described above, multi-viewpoint image data of different focus positions is acquired by one-time image capturing instructions.

By using FIG. 3, image data obtained by performing image capturing at a plurality of focus positions and from a plurality of viewpoints is explained. FIG. 3 is a diagram schematically showing a relationship between image data obtained by performing image capturing at a plurality of focus positions and from a plurality of viewpoints. The horizontal axis represents the viewpoint. Consequently, the example shown in FIG. 3 shows that the viewpoints of respective pieces of captured image data (captured image data 701, 702, 703, 704) of multi-viewpoint image data 709 are different from one another. Further, the example shows that the viewpoints of respective pieces of captured image data (captured image data 705, 706, 707, 708) of multi-viewpoint image data 710 are different from one another. The example also shows that the captured image data 701 and 705 are image data obtained by performing image capturing from the same viewpoint. The example also shows that the captured image data 702 and 706 are image data obtained by performing image capturing from the same viewpoint. The example also shows that the captured image data 703 and 707 are image data obtained by performing image capturing from the same viewpoint. The example also shows that the captured image data 704 and 708 are image data obtained by performing image capturing from the same viewpoint. Further, the example shows that the focus positions of the multi-viewpoint image data 709 and 710 shown one on top of the other in the vertical direction (in the vertical direction in FIG. 3) are different from each other. By causing FIG. 3 to correspond to the examples shown in FIG. 2A to FIG. 2D, the multi-viewpoint image 709 corresponds to the multi-viewpoint image data in which the object 601 is in focus (captured image data of viewpoints 1, 2, 3, 4). Further, the multi-viewpoint image 710 corresponds to the multi-viewpoint image data in which the object 602 is in focus (captured image data of viewpoints 1, 2, 3, 4).

Here, the number of image capturing units is four, but the number of image capturing units is not limited to four. It is possible to apply the present embodiment as long as an image capturing apparatus includes a plurality of image capturing units. Further, the example in which the four image capturing units are arranged in the form of a square grid is explained here, but the arrangement of the image capturing units is arbitrary. For example, each image capturing unit may be arranged in the form of a straight line or may be arranged completely randomly. In the following, there is a case where the captured image data 701 to 708 are referred to simply as image data 701 to 708.

Next, the plenoptic image capturing apparatus shown in FIG. 1B is explained.

As shown in FIG. 1B, the image capturing apparatus 101 includes the photographing button 102 on the top of the casing (upper side in FIG, 1B). Further, the image capturing apparatus 101 includes an image capturing unit 201 configured to acquire image data on the front of the casing (front side in FIG. 1B). By a user pressing down the photographing button 102, image capturing processing is started.

First, the first focus position is set and the image capturing unit 201 receives light information on a subject by a sensor.

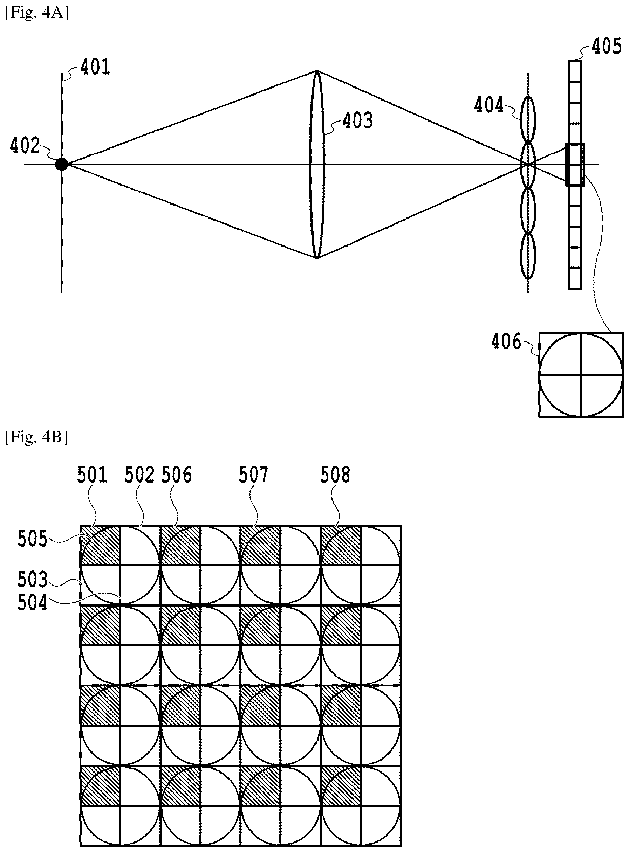

FIG. 4A shows an internal configuration of the plenoptic image capturing unit 201. In the plenoptic camera, between a main lens 403 and a sensor plane 405, a microlens array 404 is arranged. The light emitted from an object 402 arranged on a focus plane 401 of the main lens is collected by the main lens 403 and separated in the microlens array 404, and received by the sensor plane 405. By the signal received by the sensor plane 405 being subjected to A/D conversion, plenoptic image data is acquired. At the bottom-right in FIG. 4A, an enlarged view of a sensor 406, which is part of the sensor plane 405, is shown. The sensor 406 is a sensor of 2 × 2 (vertical × horizontal) pixels and receives light in the form of a circle.

In FIG. 4B, an example of image data acquired by the plenoptic image capturing unit 201 is shown. In FIG. 4B, the area divided into the shape of a grid corresponds to a pixel. For example, there are pixels 501, 502, 503, 504, 506, 507, and 508. The pixels 501, 502, 503, and 504 are each a pixel obtained by angle-resolving the light received in the form of a circle by the sensor 406. A circle 505 shown in FIG. 4B represents the light received in the form of a circle by the sensor 406. In the example shown in FIG. 4B, the light received in the form of a circle is separated into 2 × 2 (vertical × horizontal) pixels.

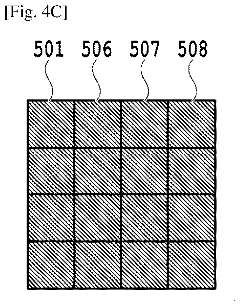

A method of generating multi-viewpoint image data from plenoptic image data is explained. By selecting and putting side by side the top-left pixels (pixels shown with slashes in FIG. 4B) for each circle shown in FIG. 4B in the order of the pixels 501, 506, 507, and 508, image data of the top-left viewpoint as shown in FIG. 4C is generated. By performing the same processing for the top-right pixels, the bottom-left pixels, and the bottom-right pixels, image data of the top-right viewpoint, that of the bottom-left viewpoint, and that of the bottom-right viewpoint are generated. In this manner, the multi-viewpoint image data as shown in FIG. 2A to FIG. 2D is generated from plenoptic image data. Here, it is assumed that the object 601 is in focus. The demosaicking processing of an image is not the main point of the present embodiment, and therefore, explanation thereof is omitted.

Next, the second focus position different from the first focus position is set and multi-viewpoint image data is acquired. Similarly, at this time, the light emitted from an object arranged on the focus plane (another focus plane different from the focus plane 401) of the main lens is collected by the main lens 403 and the light is separated in the microlens array 404, and received by the sensor plane 405. By the signal received by the sensor plane 405 being subjected to A/D conversion, plenoptic image data is acquired. After this, multi-viewpoint image data is generated from the plenoptic image data. Here, it is assumed that the object 602 is in focus. As described above, multi-viewpoint image data of different focus positions is acquired by one-time image capturing instructions.

Here, the number of times of division of the sensor 406 is set to four, i.e., 2 × 2 pixels, but the sensor 406 is not limited to 2 × 2 pixels. That is, it is possible to apply the present embodiment as long as light is divided on the sensor plane via a microlens.

As described above, it is possible for the image capturing apparatus 101 of the present embodiment to acquire multi-viewpoint image data of different focus positions as shown in FIG. 3 by both the camera array and the plenoptic camera by one-time image capturing instructions. In the above-described explanation, the image capturing apparatus that acquires two pieces of multi-viewpoint image data by one-time image capturing instructions is shown, but it is also possible to apply the present embodiment to an image capturing apparatus that acquires three or more pieces of multi-viewpoint image data by one-time image capturing instructions. In the following, how to handle image data of different viewpoint positions and different focus positions is explained, but the method of handling image data is the same for both the camera array and the plenoptic camera and the present embodiment can be applied to both the image capturing apparatuses.

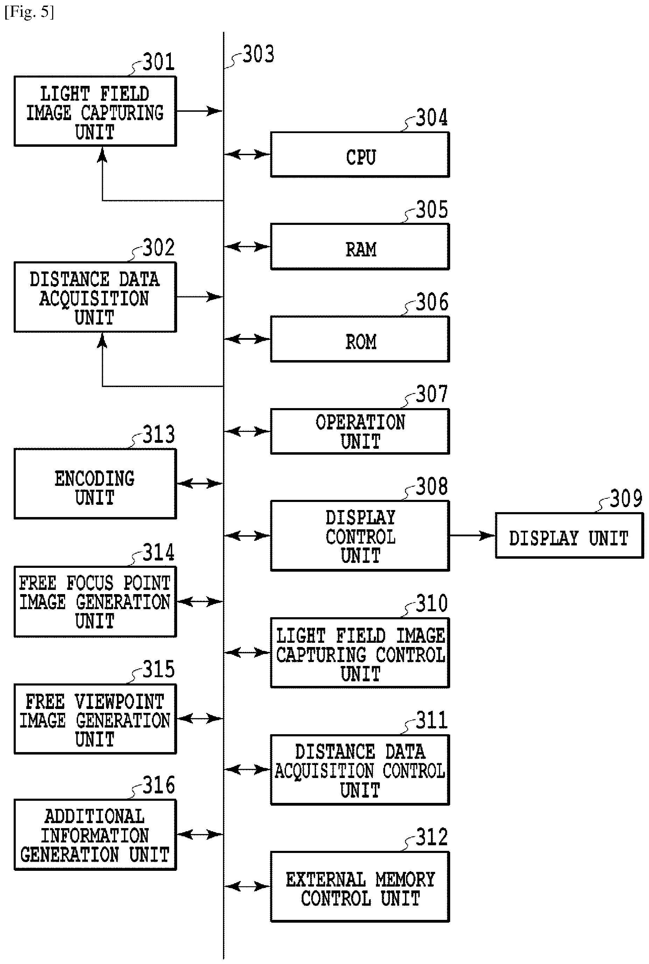

FIG. 5 is a block diagram showing an example of an internal configuration of the image capturing apparatus 101.

The image capturing apparatus 101 includes a light field image capturing unit 301, a distance data acquisition unit 302, a bus 303, a central processing unit (CPU) 304, a RAM 305, a ROM 306, an operation unit 307, a display control unit 308, a display unit 309, a light field image capturing control unit 310, a distance data acquisition control unit 311, an external memory control unit 312, an encoding unit 313, a free focus point image generation unit 314, a free viewpoint image generation unit 315, and an additional information generation unit 316.

The light field image capturing unit 301 obtains a plurality of pieces of multi-viewpoint image data whose focus positions are different from one another by image capturing. In the case where the image capturing apparatus 101 is a camera array, the light field image capturing unit 301 corresponds to the image capturing units 103 to 106 shown in FIG. 1A. In the case where the image capturing apparatus 101 is a plenoptic camera, the light field image capturing unit 301 corresponds to the image capturing unit 201 shown in FIG. 1B. In the case where the image capturing apparatus 101 is a plenoptic camera, the light field image capturing unit 301 generates the multi-viewpoint image data shown in FIG. 4C from the plenoptic image data shown in FIG. 4B. It may also be possible to improve image quality by performing image processing, such as by removing noise by using an image data group whose viewpoint is the same but whose focus positions are different, in the light field image capturing unit 301.

The distance data acquisition unit 302 acquires distance data by using a sensor other than an image sensor, such as a TOF (Time-of-Flight) distance sensor. The method of acquiring distance data does not need to be the TOF method as long as distance data can be acquired, and another method, such as a method in which a laser pattern is irradiated, may be accepted. Further, it may also be possible for the additional information generation unit 316 to generate distance data from the image data acquired by the image sensor. According to the aspect such as this, it is no longer necessary for the image capturing apparatus 101 to include the distance data acquisition unit 302.

The bus 303 is a transfer path of various kinds of data. For example, via the bus 303, the image data obtained by the light field image capturing unit 301 by image capturing and the image data acquired by the distance data acquisition unit 302 are sent to a predetermined processing unit.

The CPU 304 centralizedly controls each unit.

The RAM 305 functions as a main memory, a work area, etc., of the CPU 304.

The ROM 306 stores control programs or the like executed by the CPU 304.

The operation unit 307 includes a button, a mode dial, etc. Via the operation unit 307, user instructions are input.

The display unit 309 displays a photographed image and a character. The display unit 309 is, for example, a liquid crystal display. It may also be possible for the display unit 309 to have a touch screen function. In this case, it may also be possible to input user instructions via a touch screen in place of the operation unit 307.

The display control unit 308 performs display control of an image and a character that are displayed on the display unit 309.

The light field image capturing control unit 310 performs control of the image capturing system based on instructions from the CPU 304. For example, the light field image capturing control unit 310 performs focusing, opens/closes a shutter, adjusts an aperture, performs continuous photographing, and so on, based on instructions from the CPU 304. Due to this, in the light field image capturing unit 301, a plurality of pieces of multi-viewpoint image data whose focus positions are different from one another is acquired.

The distance data acquisition control unit 311 controls the distance data acquisition unit 302 based on instructions from the CPU 304. In the present embodiment, the distance data acquisition control unit 311 controls starting and terminating the acquisition of distance data by the distance data acquisition unit 302.

The external memory control unit 312 is an interface for connecting a personal computer (PC) and other media (e.g., hard disc, memory card, CF card, SD card, USB memory) and the bus 303.

The encoding unit 313 encodes digital data. Further, the encoding unit 313 stores encoded digital data (hereinafter, called encoded data) in a predetermined format. Furthermore, the encoding unit 313 generates management information, to be described later, and stores the management information in the above-described predetermined format along with the encoded data.

The free focus point image generation unit 314 generates image data whose focus position is different from that of the image data obtained by the light field image capturing unit 301 by image capturing.

The free viewpoint image generation unit 315 generates image data whose viewpoint position is different from that of the image data obtained by the light field image capturing unit 301 by image capturing.

The additional information generation unit 316 extracts structural information on an image. For example, the additional information generation unit 316 generates distance data from multi-viewpoint image data. Further, for example, the additional information generation unit 316 generates area division data by performing area division for each object based on the multi-viewpoint image data and the distance data.

Details of the encoding unit 313, the free focus point image generation unit 314, the free viewpoint image generation unit 315, and the additional information generation unit 316 will be described later. It may also be possible for the image capturing apparatus 101 to include components other than those described above.

### (Encoding unit)

The encoding unit 313 is explained. The encoding unit 313 is capable of inputting the following digital data.
- Multi-viewpoint image data of different focus positions obtained by the light field image capturing unit 301 by image capturing
- Distance data acquired by the distance data acquisition unit 302
- Image data whose focus position is different from that of the captured image, which is generated by the free focus point image generation unit 314
- Image data whose viewpoint position is different from that of the captured image, which is generated by the free viewpoint image generation unit 315
- Distance data, area division data generated by the additional information generation unit 316
- Camera external parameters and camera internal parameters, to be described later

The digital data input to the encoding unit 313 is encoded and stored in a predetermined format. The wording such as "data is stored in a predetermined format" is used, but specifically, this means that data is stored in a storage medium or the like in accordance with a predetermined format. Digital data that is stored in a format can be added and deleted. The multi-viewpoint image data of different focus positions obtained by the light field image capturing unit 301 by image capturing and the distance data acquired by the distance data acquisition unit 302 are input to the encoding unit 313 via the bus 303. The image data generated by the free focus point image generation unit 314, the image data generated by the free viewpoint image generation unit 315, and the distance data and the area division data generated by the additional information generation unit 316 are input to the encoding unit 313 via the bus 303. The camera external parameters and the camera internal parameters are input to the encoding unit 313 from the light field image capturing control unit 310 via the bus 303.

Next, a method of encoding multi-viewpoint image data, image data, distance data, and area division data is explained. The multi-viewpoint image data is a collection of image data whose focus position is the same and whose viewpoint positions are different.

For image data, the encoding unit 313 encodes the image data by using an encoding scheme of a single-viewpoint image, such as the JPEG and the PNG.

For multi-viewpoint image data, the encoding unit 313 may encode each piece of the image data by using an encoding scheme of a single-viewpoint image, such as the JPEG and the PNG, or by using an encoding scheme of a multi-viewpoint image, such as the MVC (Multiview Video Coding).

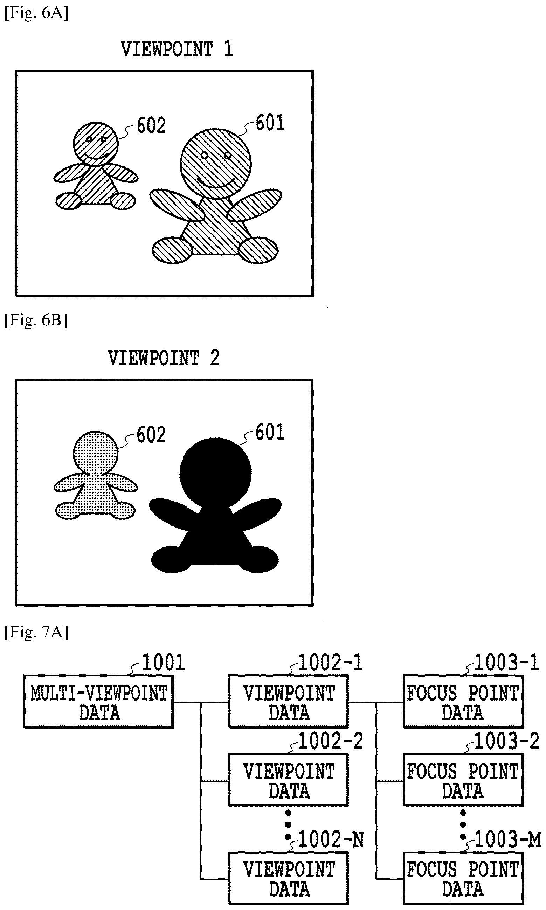

For distance data, the encoding unit 313 represents the distance data as image data and encodes the image data by using an encoding scheme of a single-viewpoint image, such as the JPEG and the PNG. For example, distance data is represented as an 8-bit gray image. The pixel value of each pixel in the gray image corresponds to the distance value in a one-to-one manner. Conversion from the distance value to an 8-bit pixel value may be performed by equally dividing the distance value between the minimum distance value and the maximum distance value in eight bits or by performing nonlinear division so that the resolution at a nearer distance has a higher resolution. Alternatively, another method, such as a method of causing the pixel value and the distance value to correspond to each other by using a lookup table, may be accepted. The representation of image data is not limited to an 8-bit gray image and it may also be possible to use another representation method, such as a method of holding the distance value of each pixel as binary data. FIG. 6A and FIG. 6B are diagrams each showing an example of an image represented by distance data and an example of an image represented by area division data. In FIG. 6A, an example of an image represented by distance data is shown. To the object 601 and the object 602, different pixel values are allocated. Further, also within the object 601, different pixel values are allocated to portions whose distances from the image capturing unit are different.

For area division data, the encoding unit 313 represents the area division data as image data and encodes the image data by using an encoding scheme of a single-viewpoint image, such as the JPEG and the PNG. The area division data is also represented as an 8-bit gray image like distance data. The pixel value of each pixel in the gray image corresponds to the area number. For example, in the case of black (pixel value: 0), the area number is 0 and in the case of white (pixel value: 255), the area number is 255. Of course, as long as the area number and the pixel value correspond to each other, it may also be possible to use another representation method, such as a method of representing area division data as an RGB color image and a method of holding the area number as binary data. In FIG. 6B, an example of an image represented by area division data is shown. In FIG. 6B, different pixel values are allocated to the object 601 and the object 602. The pixel values within the object 601 are the same because of being the same object.

Next, the format in which encoded data is stored is explained.

In the format, the previously described encoded data and management information that associates each piece of data with one another are stored. In FIG. 7A, an example of management information is shown. The management information is information in which a relationship between each piece of the encoded data and a pointer are described. In the present embodiment, as shown in FIG. 7A, the management information is described in a hierarchical structure. Further, as shown in FIG. 7A, the management information includes multi-viewpoint data 1001 that centralizedly controls data of all viewpoints, viewpoint data 1002 (1002-1 to 1002-N) that centralizedly controls data of each viewpoint, and focus point data 1003 (1003-1 to 1003-M) that centralizedly controls data of each focus point. In FIG. 7A the management information in the case where the number of viewpoints is N and the number of focus points is M is shown.

Here, information that is stored in the multi-viewpoint data 1001, the viewpoint data 1002, and the focus point data 1003 is explained.

In the multi-viewpoint data 1001, information that centralizedly controls data of all viewpoints, such as the number of viewpoints and the number of the representative viewpoint, is described. The number of viewpoints corresponds to the number of image capturing units in the case of the camera array image capturing apparatus as shown in FIG. 1A. The representative viewpoint a viewpoint to which priority is given in the case where a thumbnail of images or the like is displayed. The number of the representative viewpoint is a number capable of identifying the representative viewpoint. In addition to the above, in the case where distance data is represented by a lookup table, information on the lookup table is described. Further, in the case where the image size is the same for all the viewpoints, information on the image size is described. As long as the information is information that centralizedly controls data of all viewpoints, the contents that are described are not limited to those.

In the viewpoint data 1002, the camera external parameters, the number of focus point images, the number of the representative focus point image, the distance data reference information, the representation method of distance data, the minimum value and the maximum value of the distance, area division data reference information, etc., are described. The camera external parameters are information indicating a viewpoint (specifically, viewpoint position, viewpoint direction) or the like. In the present embodiment, the coordinates of the viewpoint position are described in the viewpoint data 1002 as the camera external parameter. The representative focus point image is an image corresponding to a focus point to which priority is given in the case where a thumbnail of images is displayed. The number of the representative focus point image is a number capable of identifying the representative focus point image. The distance data reference information is information for accessing the distance data (e.g., a pointer to the distance data). The area division data reference information is information for accessing the area division data (e.g., a pointer to the area division data). As long as the information is information that is made use of for each viewpoint, the contents that are described are not limited to those.

In the focus point data 1003, the camera internal parameters or the like are described. The camera internal parameters indicate the focal length, the f-stop, the AF (auto focus) information at the time of being brought into focus, the distortion of a lens, etc. As long as the information is information that is made use of for each image, the contents that are described are not limited to those. In the focus point data 1003, image data reference information is further described. The image data reference information is information for accessing the image data (e.g., a pointer to the image data). Due to this, the image data reference information is associated with the viewpoint information (e.g., the coordinates of the viewpoint position described in the viewpoint data 1002) indicating the viewpoint of the image data and the focus point information (e.g., the AF information described in the focus point data 1003) indicating the focus position of the image data.

By describing the above-described multi-viewpoint data 1001, the viewpoint data 1002, and the focus point data 1003 as management information, it is possible to associate the multi-viewpoint image data, the distance data, and the area division data with one another. Further, by describing the management information in the XML format, it is also made possible to read the management information by a standard XML parser. The structure of the management information is not limited to the structure shown in FIG. 7A. As long as the image data reference information for accessing the image data is associated with the viewpoint information indicating the viewpoint of the image data and the focus point information indicating the focus position of the image data, the management information may have another structure.

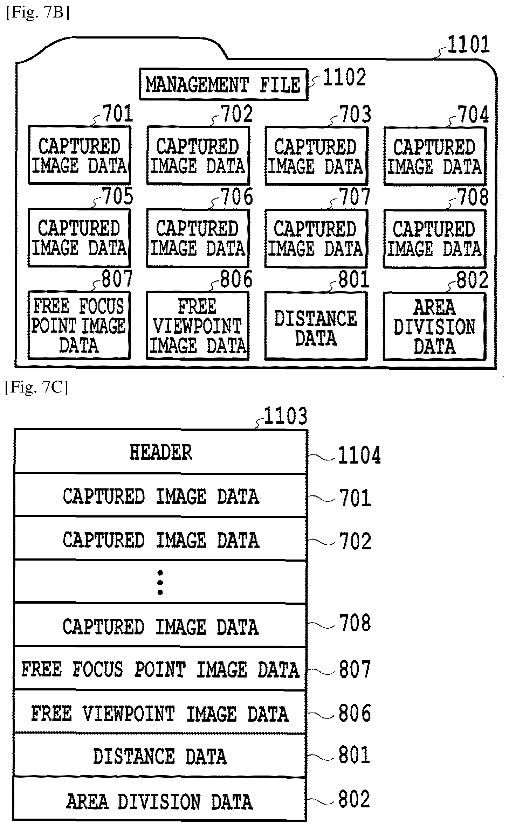

As to the file format in which management information, multi-viewpoint image data, distance data, and area division data are stored, two formats are shown below. In FIG. 7B and FIG. 7C, an example of the format is shown, respectively.

The first format is a format that saves a management file 1102 in which management information is described and each pieces of data in a folder 1101. Each piece data is the image data 701 to 708, distance data 801, area division data 802, image data 806 that is generated by the free-viewpoint image generation unit 315 (hereinafter, called free viewpoint image data), and image data 807 that is generated by the free focus point image generation unit 314 (hereinafter, called free focus point image data).

The second format is a format that describes management information in a header 1104 of a file 1103 and saves each piece of data in the file 1103. Each piece of data is the image data 701 to 708, the distance data 801, the area division data 802, the free viewpoint image data 806, and the free focus point image data 807.

As described above, the multi-viewpoint image data, the image data, the distance data, and the area division data are encoded and stored in the above-described format along with the management information indicating the relationship between each piece of data. Hereinafter, the above-described format is called a "multidimensional information format".

The encoding unit 313 saves the multidimensional information format in the storage unit (storage medium), not shown schematically, which the encoding unit 313 itself has. It may also be possible for the encoding unit 313 to store the multidimensional information format in an external memory (storage medium such as an SD card) via the external memory control unit 312.

### (Additional information generation unit)

The additional information generation unit 316 is explained. The additional information generation unit 316 inputs the multidimensional information format from the encoding unit 313 via the bus 303. In the case where the multidimensional information format is stored in an external memory, it may be possible for the additional information generation unit 316 to read the multidimensional information format from the external memory via the external memory control unit 312.

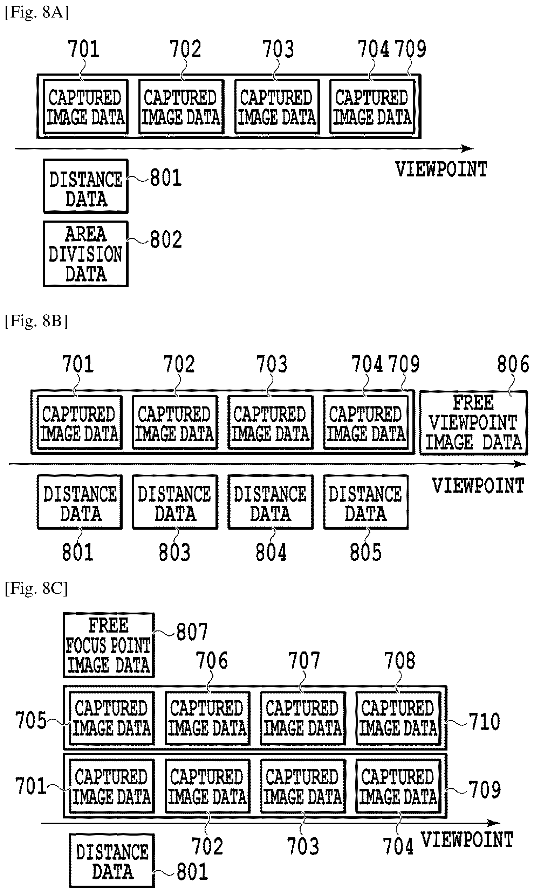

In FIG. 8A, data that is input to the additional information generation unit 316 and data that is output from the additional information generation unit 316 are shown schematically. The additional information generation unit 316 acquires multi-viewpoint image data and distance data from the input multidimensional information format. Here, the additional information generation unit 316 acquires the multi-viewpoint image data 709 (image data 701, 702, 703, 704) and the distance data 801 of the viewpoint for which additional information is generated shown in FIG. 8A. In the case where the distance data is not stored in the above-described format, only the multi-viewpoint image data 709 (image data 701, 702, 703, 704) is acquired. The viewpoint for which additional information is generated is specified by a user or the like via the operation unit 307 and the display unit 309. Here, it is assumed that viewpoint 1 is specified.

In the case where the distance data is stored in the multidimensional information format, the additional information generation unit 316 generates and outputs the area division data 802. In the case where the distance data is not stored in the multidimensional information format, the additional information generation unit 316 generates and outputs the distance data 801 and the area division data 802. The area division data is data that is made use of in refocus processing of a second embodiment, to be described later. Consequently, in the present embodiment, it may also be possible for the additional information generation unit 316 to generate and output only the distance data 801. The output digital data is stored in the multidimensional information format in the encoding unit 313 via the bus 303. At this time, the encoding unit 313 adds information (a pointer of the distance data 801 or the like) relating to the distance data 801 to the viewpoint data corresponding to viewpoint 1 of the management information within the multidimensional information format. In the case where the multidimensional information format is stored in an external memory, it is sufficient for the additional information generation unit 316 to update the multidimensional information format stored in the external memory by using the generated additional information.

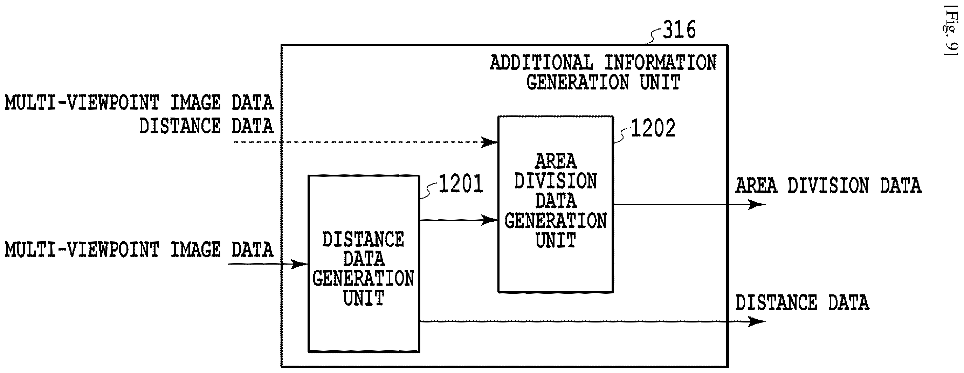

FIG. 9 is a block diagram showing an example of an internal configuration of the additional information generation unit 316. The additional information generation unit 316 includes a distance data generation unit 1201 and an area division data generation unit 1202. In the present embodiment, explanation is given on the assumption that the additional information generation unit 316 is one component within the image capturing apparatus 101, but the function of the additional information generation unit 316 may be implemented by an external apparatus, such as a PC. That is, it is possible to implement the additional information generation unit 316 in the present embodiment also as one function of the image capturing apparatus or as an independent image processing apparatus.

In the following, each component of the additional information generation unit 316 is explained.

In the case where only the multi-viewpoint image data is input to the additional information generation unit 316, the distance data generation unit 1201 generates distance data from the multi-viewpoint image data and outputs the generated distance data to the area division data generation unit 1202 and the bus 303. The area division data generation unit 1202 generates area division data from the multi-viewpoint image data and the distance data input from the distance data generation unit 1201 and outputs the area division data to the bus 303. In the case where the additional information generation unit 316 outputs only the distance data as output data, the processing by the area division data generation unit 1202 is not performed.

In the case where the multi-viewpoint image data and the distance data acquired by the distance data acquisition unit 302 are input to the additional information generation unit 316, the area division data generation unit 1202 generates area division data from both pieces of input data and outputs the area division data to the bus 303. At this time, the processing by the distance data generation unit 1201 is not performed.

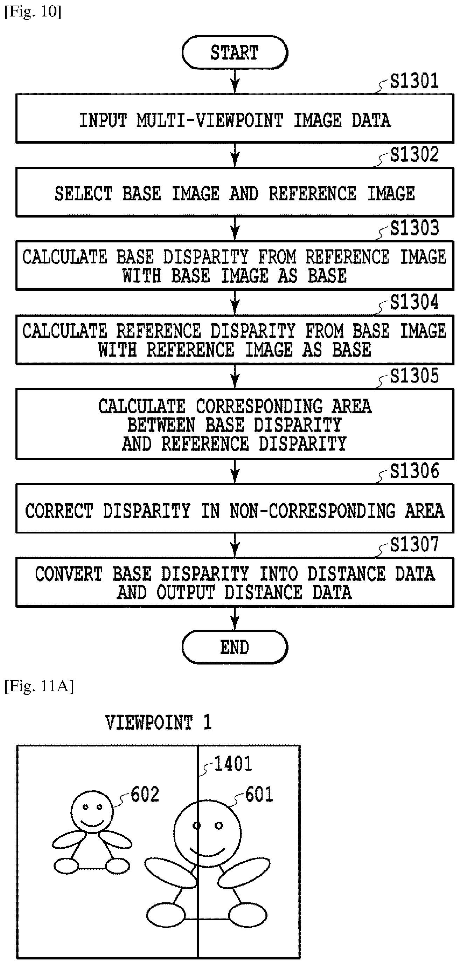

The distance data generation unit 1201 is explained. FIG. 10 is a flowchart showing processing of the distance data generation unit 1201.

At step S1301, the distance data generation unit 1201 inputs multi-viewpoint image data. Here, the case where the multi-viewpoint image data is image data corresponding to the images of four viewpoints shown in FIG. 2A to FIG. 2D is taken as an example.

At step S1302, the distance data generation unit 1201 selects a base image of a viewpoint for which distance data is generated and a reference image that is referred to for generating distance data. Here, it is assumed that the image of viewpoint 1 shown in FIG. 2A is a base image and the image of viewpoint 2 shown in FIG. 2B is a reference image. The reference image may be an image of a plurality of viewpoints, but in the present embodiment, in order to make explanation easy-to-understand, it is assumed that the reference image is an image of one viewpoint.

At step S1303, the distance data generation unit 1201 calculates a disparity from the reference image with the base image as a base. This is called a base disparity. FIG. 11A to FIG. 11D are diagrams for explaining a calculation method of a disparity.

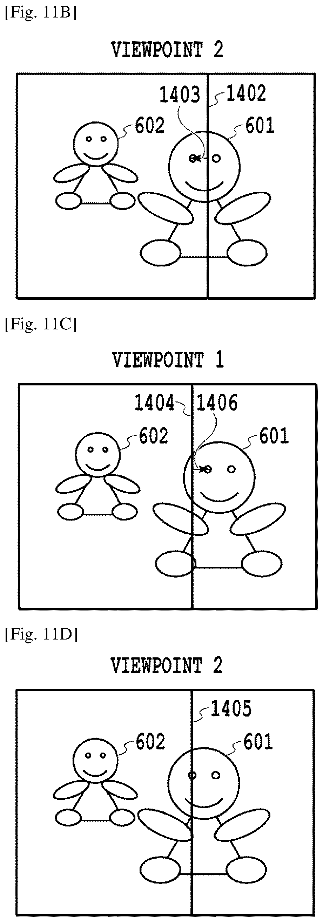

First, a calculation method of a base disparity is explained by using FIG. 11A and FIG. 11B.

FIG. 11A is a base image (image of viewpoint 1) and FIG. 11B is a reference image (image of viewpoint 2). The viewpoint position of the base image is different from that of the reference image, and therefore, the positions of an object whose image is captured are different. The amount of deviation (disparity) of an object whose image is captured depends on the distance from the image capturing apparatus 101 to the object, and therefore, it is possible to calculate distance data from the disparity.

In the case where an X-coordinate (coordinate in the horizontal direction in FIG. 11A) 1401 of the right eye of the object 601 in the base image is represented by the same coordinate in the reference image, an X-coordinate 1402 is obtained. From the X-coordinate 1402, the X-coordinate of the right eye of the object 601 in the reference image is searched for and a corresponding point is found. The difference between the X-coordinate 1402 and the X-coordinate of the corresponding point is a disparity 1403. For all the pixels in the base image, corresponding points are searched for and a base disparity is calculated.

There are various methods of searching for a corresponding point and any method may be used. For example, there is a method in which search is made for each area and a disparity that minimizes the cost value (color difference) is taken to be a corresponding point. Further, for example, there is a method in which search is made for each pixel and the cost value (color difference) is calculated, and smoothing is performed on the calculated cost value with an edge holding type filter and a disparity that minimizes the cost value is taken to be a corresponding point.

At step S1304, the distance data generation unit 1201 calculates a disparity from the base image with the reference image as a base. This is called a reference disparity.

Next, a method of calculating a reference disparity is explained by using FIG. 11C and FIG. 11D.

FIG. 11C is a base image (image of viewpoint 1) and FIG.11D is a reference image (image of viewpoint 2). In the case where an X-coordinate 1405 of the right eye of the object 601 in the reference image is represented by the same coordinate in the base image, an X-coordinate 1404 is obtained. From the X-coordinate 1404, the X-coordinate of the right eye of the object 601 in the base image is searched for and a corresponding point is found. The difference between the X-coordinate 1404 and the X-coordinate of the corresponding point is a disparity 1406. For all the pixels in the reference image, corresponding points are searched for and a reference disparity is calculated.

At S1305, the distance data generation unit 1201 calculates a corresponding area between the base disparity calculated at step S1303 and the reference disparity calculated at step S1304. The base disparity and the reference disparity are compared for each pixel and in the case where the difference between the base disparity and the reference disparity is less than or equal to a threshold value, the comparison-target pixel is classified as a corresponding area and in the case where the difference is greater than the threshold value, the comparison-target pixel is classified as a non-corresponding area. That is, the corresponding area is an area in which the coincidence between the base disparity and the reference disparity is high and the reliability of the disparity is high. The non-corresponding area is an area in which the coincidence between the base disparity and the reference disparity is low and the reliability of the disparity is low.

At step S1306, the distance data generation unit 1201 corrects the disparity in the non-corresponding area classified at step S1304. As described previously, the reliability of the disparity is low in the non-corresponding area, and therefore, the disparity is supplemented by the base disparities in the peripheral corresponding areas in which the reliability is high and the base disparity in the non-corresponding area is determined.

At step S1307, the distance data generation unit 1201 converts the base disparity into distance data and outputs the distance data.

The generation method of distance data in the distance data generation unit 1201 is not limited to the above-described method. For the generation processing of distance data, another method may be used, such as a method that uses a reference image of a plurality of viewpoints, as long as the method generates distance data from multi-viewpoint image data. Further, in the case where the distance data generation unit 1201 inputs a plurality of pieces of multi-viewpoint image of different focus positions at step S1301, it is sufficient to output distance data generated for each piece of multi-viewpoint image data. Then, it is sufficient for the encoding unit 313 to store the distance data in the multidimensional information format after integrating each piece of distance data by weighted averaging or the like. With the aspect such as this, it is made possible to acquire more accurate distance data. It may also be possible for the distance data generation unit 1201 to output the distance data after integrating each piece of distance data.

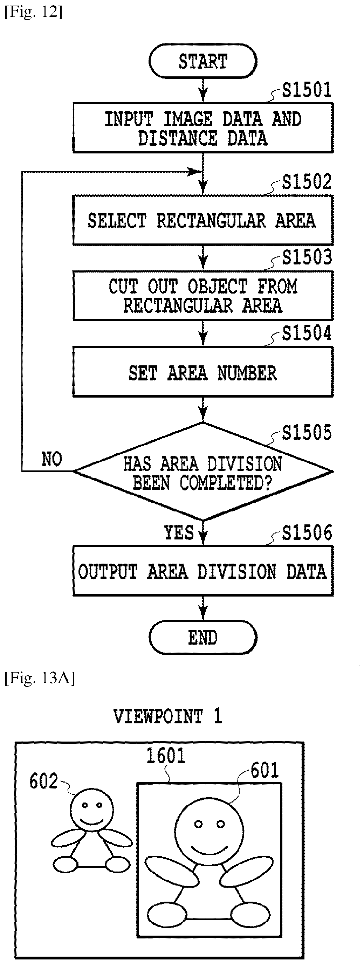

Next, the area division data generation unit 1202 is explained. FIG. 12 is a flowchart showing processing of the area division data generation unit 1202.

At step S1501, the area division data generation unit 1202 inputs image data of the viewpoint for which area division data is generated and distance data. Here, the image data corresponding to the image of viewpoint 1 shown in FIG. 2A and the distance data of viewpoint 1 shown in FIG. 6A are input.

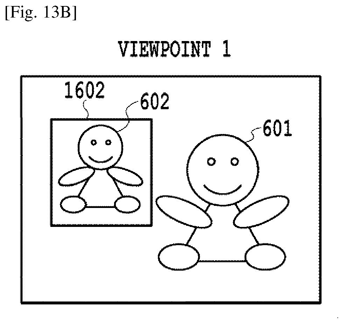

At step S1502, the area division data generation unit 1202 selects a rectangular area that surrounds an object to be cut out based on a user operation that is input via the operation unit 307. FIG. 13A and FIG. 13B are diagrams showing the way a rectangular area that surrounds an object is selected. It may also be possible to specify a rectangular area that surrounds an object to be cut out by using recognition processing, such as processing to detect a human body, without a user operation. In the example shown in FIG. 13A, a rectangular area 1601 that surrounds the object 601 is selected.

At step S1503, the area division data generation unit 1202 performs processing to cut out an object from the selected rectangular area. The area division data generation unit 1202 extracts a main object within the rectangular area in the image data by performing clustering processing on the distance data within the rectangular area that surrounds the object. It may also be possible to extract a main object within the rectangular area in the image data by adding the distance data as a parameter of a cost function and by performing global optimization processing whose typical example is Graph Cut.

At step S1504, the area division data generation unit 1202 sets an area number to the cut-out object. In the present embodiment, the area number is represented by an 8-bit numerical value (0 to 255). Any number may be set as the area number as long as the number can be represented with eight bits (0 to 255). Due to this, for example, in the example shown in FIG. 6B, area number 1 is allocated to the object 601.

At step S1505, the area division data generation unit 1202 checks whether to terminate the area division processing.

In the case where an object to be cut out is left (NO at step S1505), the area division data generation unit 1202 returns to the processing at step S1502. After returning to the processing at step S1502, the area division data generation unit 1202 selects a rectangular area 1602 that surrounds the object 602 as shown in FIG. 13B and performs the processing at steps S1503 and S1504. Due to this, for example, in the example shown in FIG. 6B, area number 2 is allocated to the object 602.

In the case where there is no object to be cut out left (YES at step S1505), the area division data generation unit 1202 terminates the area division.

At step S1506, the area division data generation unit 1202 outputs area division data.

The generation processing of area division data by the area division data generation unit 1202 is not limited to the above-described method. For the generation processing of area division data, another method may be used, such as a method of selecting part of an object in place of a rectangular area, as long as the method generates area division data from image data and distance data.

### (Free viewpoint image generation unit)

The free viewpoint image generation unit 315 is explained. The free viewpoint image generation unit 315 inputs the multidimensional information format from the encoding unit 313 via the bus 303. Here, in the case where the multidimensional information format is stored in an external memory, it is sufficient for the free viewpoint image generation unit 315 to read the multidimensional information format from the external memory via the external memory control unit 312. The data that is input to the free viewpoint image generation unit 315 and the data that is output from the free viewpoint image generation unit 315 are explained by using FIG. 8B.

The free viewpoint image generation unit 315 acquires multi-viewpoint image data and distance data corresponding to each viewpoint from the input multidimensional information format. Here, the free viewpoint image generation unit 315 acquires the multi-viewpoint image data 709 (image data 701, 702, 703, 704) and the distance data 801, 803, 804, and 805 corresponding to each viewpoint.

The free viewpoint image generation unit 315 generates and outputs the image data (free viewpoint image data) 806 of the viewpoint different from that of the input multi-viewpoint image data. The output digital data is stored in the multidimensional information format in the encoding unit 313 via the bus 303. At this time, the encoding unit 313 adds the viewpoint data corresponding to the free viewpoint image data 806 to the management information within the multidimensional information format, and further adds the focus point data corresponding to the free viewpoint image data 806 in association with the viewpoint data. In the case where the multidimensional information format is stored in an external memory, it is sufficient for the free viewpoint image generation unit 315 to update the multidimensional information format stored in the external memory by using the generated free viewpoint image data 806.

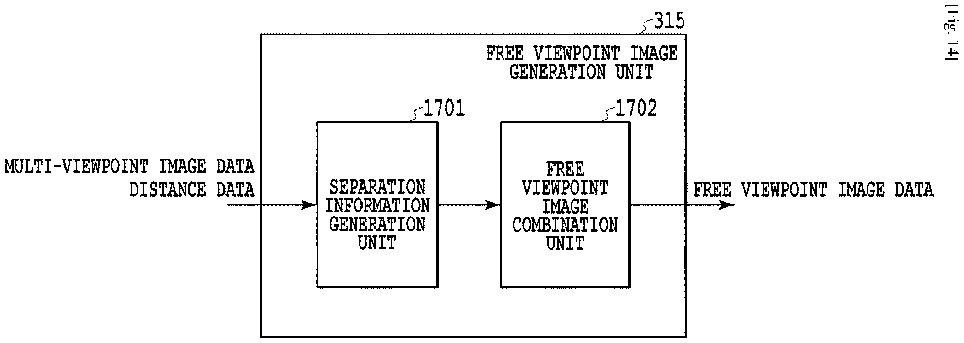

FIG. 14 is a block diagram showing an example of an internal configuration of the free viewpoint image generation unit 315. The free viewpoint image generation unit 315 includes a separation information generation unit 1701 and a free viewpoint image combination unit 1702. In the present embodiment, explanation is given on the assumption that the free viewpoint image generation unit 315 is one component within the image capturing apparatus 101, but the function of the free viewpoint image generation unit 315 may be implemented by an external apparatus, such as a PC. That is, it is possible to implement the free viewpoint image generation unit 315 in the present embodiment also as one function of an image capturing apparatus or as an independent image processing apparatus.

In the following, each component of the free viewpoint image generation unit 315 is explained.

In the case where multi-viewpoint image data and distance data corresponding to each viewpoint are input to the free viewpoint image generation unit 315, first, both pieces of data are sent to the separation information generation unit 1701. Hereinafter, an image represented by image data of each viewpoint is called a viewpoint image.

The separation information generation unit 1701 generates information (separation information) that serves as a foundation for separating each viewpoint image corresponding to the input multi-viewpoint image data into two layers (a boundary layer that is a boundary of a subject, a main layer that is not the boundary of the subject). Specifically, the separation information generation unit 1701 classifies each pixel within each viewpoint image into two kinds of pixel: a boundary pixel adjacent to the boundary of a subject (hereinafter, called "object boundary") and a normal pixel other than the boundary pixel. Then, the separation information generation unit 1701 generates information capable of specifying the kind to which each pixel corresponds.

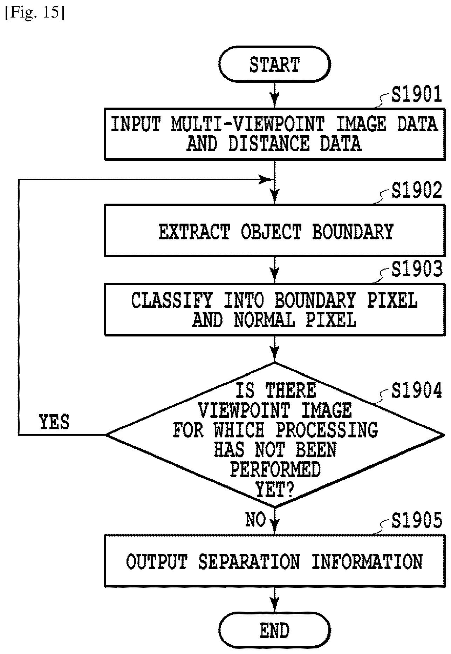

FIG. 15 is a flowchart showing processing of the separation information generation unit 1701.

At step S1901, the separation information generation unit 1701 inputs multi-viewpoint image data and distance data corresponding to each viewpoint.

At step S1902, the separation information generation unit 1701 extracts the object boundary of a viewpoint image. In the present embodiment, the portion at which the difference between the distance data of the target pixel and the distance data of an adjacent pixel (hereinafter, called "difference in distance data") is greater than or equal to a threshold value is specified as the object boundary. Specifically, the processing is as follows.

First, the separation information generation unit 1701 scans the viewpoint image in the longitudinal direction, compares the difference in distance data with the threshold value, and specifies the pixel whose difference in distance data is greater than or equal to the threshold value. Next, the separation information generation unit 1701 scans the viewpoint image in the transverse direction, similarly compares the difference in distance data with the threshold value, and specifies the pixel whose difference in distance data is greater than or equal to the threshold value. Then, the separation information generation unit 1701 specifies the sum-set of the pixels specified in the longitudinal direction and in the transverse direction, respectively, as the object boundary. As the threshold value, for example, a value, such as "10", is set in the case where the distance data is quantized with eight bits (0 to 255).

At step S1903, the separation information generation unit 1701 classifies each pixel within each viewpoint image into the two kinds of pixel: the boundary pixel and the normal pixel. Specifically, the separation information generation unit 1701 refers to the distance data acquired at step S1901 and determines a pixel adjacent to the object boundary specified at step S1902 as the boundary pixel.

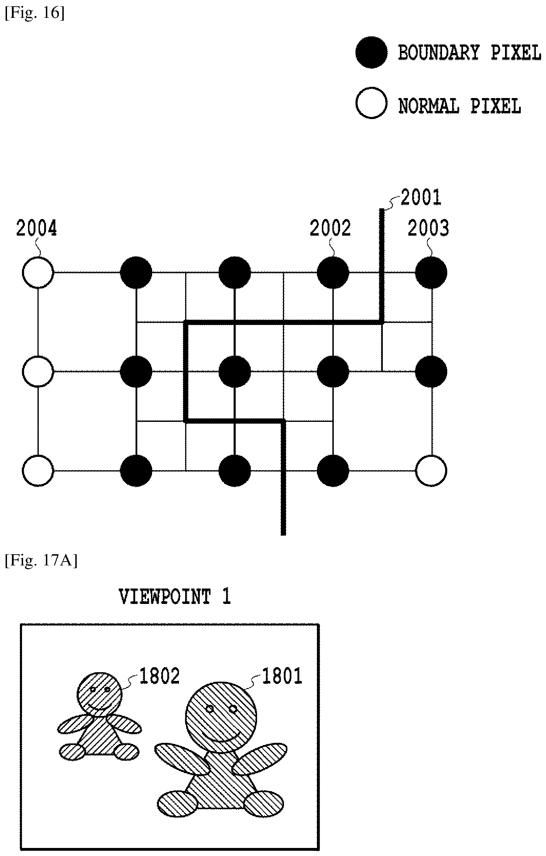

FIG. 16 is a diagram showing the way each pixel within a viewpoint image is classified into two kinds of pixel: the boundary pixel and the normal pixel. Adjacent pixels that stride an object boundary 2001 are classified as boundary pixels 2002 and2003, and the rest of the pixels are classified as normal pixels 2004, respectively. In FIG. 16, the boundary pixel is represented by a black circle and the normal pixel is represented by a white circle. In the following diagrams also, the boundary pixel is represented by a black circle and the normal pixel by a white circle. Here, only the pixels adjacent to the object boundary are classified as the boundary pixels, but another separation method may be used, such as method of classifying pixels within the width of two pixels from the object boundary as the boundary pixels.

At step S1904, the separation information generation unit 1701 determines whether the classification of the pixel has been completed for all the viewpoint images corresponding to the input multi-viewpoint image data.

In the case where there is a viewpoint image for which the processing has not been performed yet (YES at step S1904), the separation information generation unit 1701 returns to the processing at step S1902 and performs the processing at step S1902 and step S1903 for the next viewpoint image. On the other hand, in the case where the classification of the pixel has been completed for all the viewpoint images (NO at step S1904), the separation information generation unit 1701 proceeds to the processing at step S1905.

At step S1905, the separation information generation unit 1701 sends separation information capable of specifying the boundary pixel and the normal pixel to the free viewpoint image combination unit 1702. Once the boundary pixels are specified, it turns out that the rest of the pixels are the normal pixels, and therefore, the separation information may be any information capable of specifying the boundary pixel. Consequently, for example, as the separation information, a method or the like is considered, in which a flag is attached to the pixel in such a manner that " 1" is attached to the pixel determined to be the boundary pixel and "0" is attached to the pixel determined to be the normal pixel. The free viewpoint image combination unit 1702 separates a predetermined viewpoint image into two layers (i.e., a boundary layer made up of the boundary pixels and a main layer made up of the normal pixels) by using the separation information such as this.

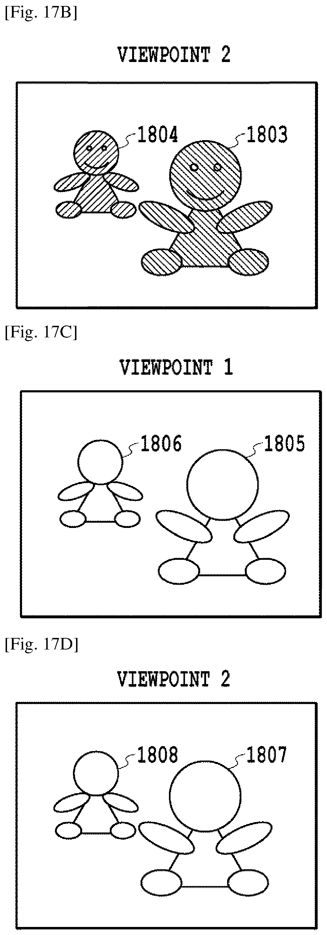

FIG. 17A to FIG. 17D are diagrams for explaining the processing of the separation information generation unit 1701. In the examples shown in FIG. 17A to FIG. 17D, object insides 1801 and 1802 in the image of viewpoint 1 and object insides 1803 and 1804 in the image of viewpoint 2 are represented as the main layer. Further, object boundary portions 1805 and 1806 in the image of viewpoint 1 and object boundary portions 1807 and 1808 in the image of viewpoint 2 are represented as the boundary layer. In FIG. 17A and FIG. 17B, in order to simplify explanation, only the layer made up of the normal pixels inside the object boundary portion is represented as the main layer.

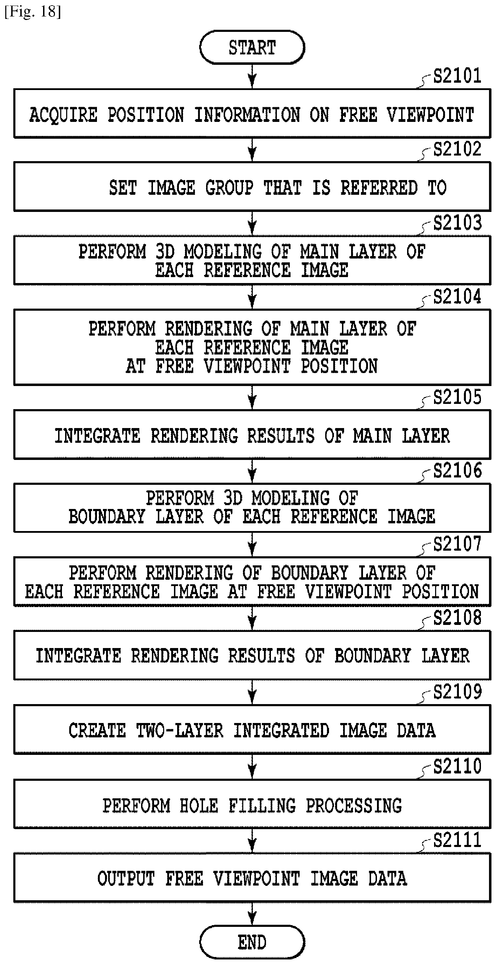

The free viewpoint image combination unit 1702 sets a reference image group that is made use of for free viewpoint image combination, and performs rendering of the main layer of the reference image group first, and next, performs rendering of the boundary layer of the reference image group. Then, the free viewpoint image combination unit 1702 generates image data (free viewpoint image data) at an arbitrary viewpoint position by combining each rendered image. FIG. 18 is a flowchart showing the processing of the free viewpoint image combination unit 1702.

At step S2101, the free viewpoint image combination unit 1702 acquires position information on an arbitrary viewpoint (hereinafter, called "free viewpoint") specified by a user. In the present embodiment, the position information on a free viewpoint is coordinate information indicating the position of a free viewpoint in the case where the position of viewpoint 1 shown in FIG. 2A is taken as a base. In the case where the coordinates of viewpoint 1 taken as a base are supposed to be (0.0, 0.0), viewpoint 2 shown in FIG. 2B is represented by the coordinates (1.0, 0.0), viewpoint 3 shown in FIG. 2C by (0.0, 1.0), and viewpoint 4 shown in FIG. 2D by (1.0, 1.0), respectively. Here, for example, in the case where a user desires to combine an image whose free viewpoint is the middle position of viewpoints 1 to 4, the user inputs the coordinates (0.5, 0.5). The method of defining the coordinates is not limited to the above-described method and it may also be possible to take a position other than viewpoint 1 as a base. Further, the method of inputting position information on a free viewpoint is not limited to the above-described method of directly inputting the coordinates. For example, in the case where the image capturing units are arranged as shown in FIG. 1A, it may also be possible to display a UI screen (not shown) indicating the arrangement of the image capturing units 103 to 106 on the display unit 309, thereby enabling a user to specify a desired free viewpoint by a touch operation or the like.

At step S2102, the free viewpoint image combination unit 1702 sets a plurality of viewpoint images (hereinafter, called "reference image group") that is referred to in generating free viewpoint image data. In the present embodiment, the free viewpoint image combination unit 1702 sets four viewpoint images close to the position of the specified free viewpoint as a reference image group. As described above, the reference image group in the case where the coordinates (0.5, 0.5) are specified as the position of the free viewpoint, the reference image group is made up of the viewpoint images of viewpoints 1 to 4 shown in FIG. 2A to FIG. 2D. The number of viewpoint images making up the reference image group is not limited to four and the reference image group may be made up of three viewpoint images around the specified free viewpoint. Further, the reference image group is only required to be a group of images corresponding to the viewpoints surrounding the position of the specified free viewpoint, and therefore, for example, it may also be possible to set viewpoint images captured at four viewpoint positions not nearest to the position of the specified free viewpoint as a reference image group.

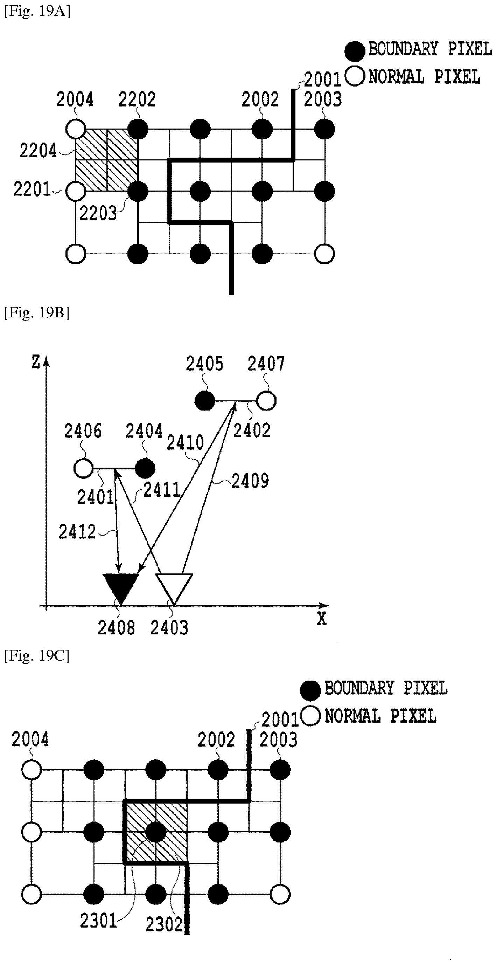

At step S2103, the free viewpoint image combination unit 1702 performs processing to generate a three-dimensional model of the main layer of the reference image. The three-dimensional model of the main layer is generated by constructing a quadrilateral mesh by mutually connecting four pixels including the normal pixels that are not related to the object boundary. In FIG. 19A, the way the three-dimensional model of the main layer is generated is shown. As shown in FIG. 19A, for example, a quadrilateral mesh 2204 is constructed by connecting pixels (the one normal pixel 2004, one normal pixel 2201, and two boundary pixels 2202 and 2203) that are four pixels including the normal pixels and none of which is related to the object boundary 2001. By repeatedly performing the processing such as this, all the quadrilateral meshes, each of which forms the three-dimensional model of the main layer, are constructed. The minimum size of the quadrilateral mesh at this time is one pixel × one pixel. In the present embodiment, all the main layers are constructed by the quadrilateral mesh having the size of one pixel × one pixel, but it may also be possible to construct the main layer by a larger quadrilateral mesh. Further, it may also be possible to construct the main layer by a mesh having a shape other than the quadrilateral, for example, such as a triangular mesh.

The X coordinate and the Y coordinate of the quadrilateral mesh made up of one pixel, which is constructed as described above, correspond to the global coordinates calculated from the camera parameters of the viewpoint image and the Z coordinate corresponds to the distance of each pixel to the subject, which is obtained from the distance information. Then, the free viewpoint image combination unit 1702 generates the three-dimensional model of the main layer by texture-mapping the color information on each pixel to the quadrilateral mesh.

Explanation is returned to the flowchart in FIG. 18.

At step S2104, the free viewpoint image combination unit 1702 performs rendering of the main layer of the reference image at the free viewpoint position. Specifically, the free viewpoint image combination unit 1702 performs rendering of the three-dimensional model of the main layer of the reference image generated at step S2103 at the free viewpoint position acquired at step S2101.

The processing at steps S2103 and S2104 is performed for each reference image of the reference image group.

In FIG. 19B, the way rendering of the main layer is performed is shown. In FIG. 19B, the horizontal axis represents the X-coordinate and the vertical axis represents the Z-coordinate. Further, in FIG. 19B, it is assumed that the object boundary (not shown schematically) exists between boundary pixels 2404 and 2405. Furthermore, in FIG. 19B, segments 2401 and 2402 (hereinafter, also represented sometimes as boundary layers 2401 and 2402 or quadrilateral meshes 2401 and 2402) each indicate the quadrilateral mesh of the main layer in the case where the three-dimensional model is generated from a viewpoint (hereinafter, called "reference viewpoint") 2403 of the reference image indicated by a white inverted triangle. That is, in the example shown in FIG. 19B, the quadrilateral mesh 2401 connecting a normal pixel 2406 and the boundary pixel 2404 and the quadrilateral mesh 2402 connecting a normal image 2407 and the boundary image 2405 are generated as the three-dimensional model of the main layer. The image obtained by performing rendering of the quadrilateral meshes 2401 and 2402 at a free viewpoint 2408 indicated by a black inverted triangle is a rendered image. In the rendering processing, the pixel portion at which no color exists is left as a hole. In FIG. 19B, arrows 2409 and 2410 indicate at which position the quadrilateral mesh 2402 is viewed at the reference viewpoint 2403 and the free viewpoint 2408, respectively. At the free viewpoint 2408 located on the left side of the reference viewpoint 2403, the quadrilateral mesh 2402 is located on the right side of the reference viewpoint 2403. Similarly, arrows 2411 and 2412 indicate at which position the quadrilateral mesh 2401 is viewed at the reference viewpoint 2403 and the free viewpoint 2408, respectively.

Explanation is returned to the flowchart in FIG. 18.

At step S2105, the free viewpoint image combination unit 1702 obtains the integrated image data of the main layer by integrating the rendering results of the main layer at the specified free viewpoint position. In the present embodiment, the (four) rendered images generated from the main layer of the reference image are integrated. The integration processing is performed for each pixel and the color after the integration is calculated by using a weighted average of each rendered image, specifically, a weighted average based on the position of the specified free viewpoint and the distance from the reference image. For example, in the case where the position of the specified free viewpoint is equidistant from the four viewpoint positions corresponding to each reference image, the weight corresponding to each rendered image is the same and is 0.25. On the other hand, in the case where the position of the specified free viewpoint is close to the viewpoint position of any of the reference images, the smaller the distance, the larger the weight is. The method of finding the average color is not limited to this. Further, the portion of a hole (the pixel at which the quadrilateral mesh is not constructed) of each rendered image is not taken to be the target of the color calculation at the time of integration. That is, for the portion of a hole in any of the rendered images, the color after the integration is calculated by using the weighted average that targets the rendered image with no hole at the portion. The portion where there is a hole in all the rendered images is left as a hole.

Explanation is returned to the flowchart in FIG. 18.

At step S2106, the free viewpoint image combination unit 1702 generates a three-dimensional model of a boundary layer of a reference image. In the boundary layer in contact with the object boundary, connection with an adjacent pixel is not performed at the time of generation of a mesh. Specifically, the free viewpoint image combination unit 1702 generates the three-dimensional model of the boundary layer by constructing one quadrilateral mesh for one pixel. In FIG. 19C, the way the three-dimensional model of the boundary layer is generated is shown. The free viewpoint image combination unit 1702 constructs a quadrilateral mesh 2302 whose size is one pixel × one pixel for a boundary pixel 2301. The free viewpoint image combination unit 1702 repeatedly performs the processing such as this for the boundary pixel and constructs all the quadrilateral meshes, each of which forms the three-dimensional model of the boundary layer. The X-coordinate and the Y-coordinate of the quadrilateral mesh made up of one pixel, which is constructed as described above, correspond to the global coordinates calculated from the camera parameters of the viewpoint image and the Z-coordinate corresponds to the distance of each boundary pixel to the subject, which is obtained from the distance information. Then, the free viewpoint image combination unit 1702 generates the three-dimensional model of the boundary layer by using the color information on each boundary pixel as the color of the quadrilateral mesh. The processing at step S2106 is performed for each reference image of the reference image group.

Explanation is returned to the flowchart in FIG. 18.

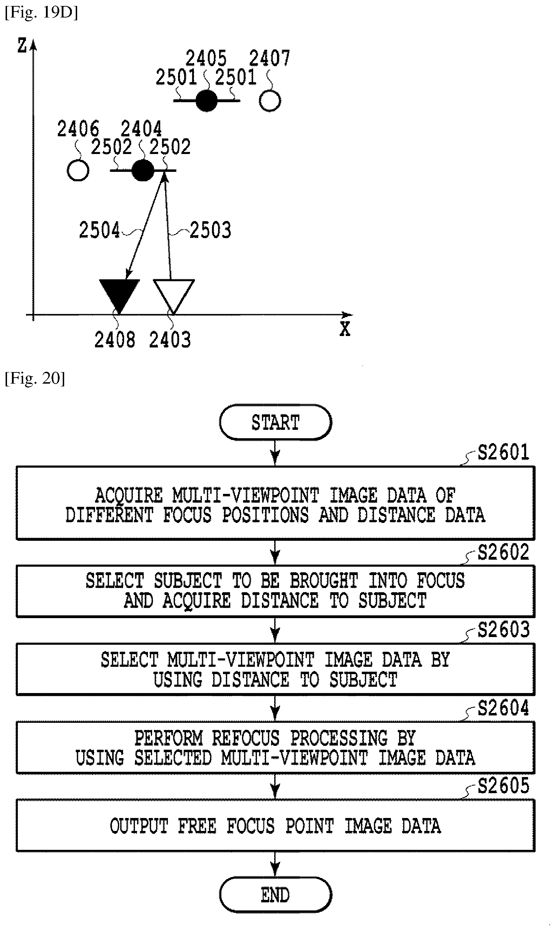

At step S2107, the free viewpoint image combination unit 1702 performs rendering of the boundary layer of the reference image. FIG. 19D is a diagram showing the way rendering of the boundary layer is performed. As in FIG. 19B, in FIG. 19D, the horizontal axis represents the X-coordinate and the vertical axis represents the Z-coordinate. Further, in FIG. 19D, it is assumed that the object boundary (not shown schematically) exists between the boundary pixel 2404 and the boundary pixel 2405. Furthermore, in FIG. 19D, segments 2501 and 2502 (hereinafter, also represented sometimes as boundary layers 2501 and 2502 or quadrilateral meshes 2501 and 2502) each indicate the quadrilateral mesh of the boundary layer in the case where the three-dimensional model is generated from the reference viewpoint 2403 indicated by a white inverted triangle. The boundary layers 2501 and 2502 are each a quadrilateral mesh having distance information and color information on the boundary pixels 2405 and 2404 and made up of one pixel. The image obtained by performing rendering of the quadrilateral meshes 2501 and 2502 each made up of one pixel at the position of the free viewpoint (free viewpoint 2408 indicated by a black inverted triangle in FIG. 19D) specified at step S2101 is a rendered image of the boundary layer. In the rendering processing of the boundary layer also, the portion at which no color exists (pixel for which the quadrilateral mesh is not constructed) is left as a hole. Then, the free viewpoint image combination unit 1702 performs the rendering processing as described above for all the reference images of the reference image group and obtains the rendered image group of the boundary layer. In FIG. 19D, arrows 2503 and 2504 indicate at which position the quadrilateral mesh 2502 is viewed at the reference viewpoint 2403 and the free viewpoint 2408, respectively. At the free viewpoint 2408 located on the left side of the reference viewpoint 2403, the quadrilateral mesh 2502 is located on the right side of the reference viewpoint 2403.

Explanation is returned to the flowchart in FIG. 18.

At step S2108, the free viewpoint image combination unit 1702 obtains the integrated image data of the boundary layer by integrating the rendered image group of the boundary layer. At this time, by the same integration processing as that at step S2105, the (four) rendered images of the boundary layer generated from the four viewpoint images are integrated.

Explanation is returned to the flowchart in FIG. 18.

At step S2109, the free viewpoint image combination unit 1702 obtains two-layer integrated image data by integrating the integrated image data of the main layer obtained at step S2105 and the integrated image data of the boundary layer obtained at step S2108. The integration processing here is also performed for each pixel. At this time, an image with higher accuracy is obtained stably from the integrated image of the main layer than from the integrated image of the boundary layer, and therefore, the integrated image of the main layer is preferentially made use of. Consequently, only in the case where there is a hole in the integrated image of the main layer and there is no hole in the integrated image of the boundary layer, supplementation is performed by using the color of the boundary layer. In the case where there is a hole both in the integrated image of the main layer and in the integrated image of the boundary layer, the portion is left as a hole. By the above processing, the free viewpoint image combination unit 1702 obtains two-layer integrated image data.

The reason the processing is performed in the order of the rendering of the main layer and the rendering of the boundary layer in the present embodiment is to suppress the image quality in the vicinity of the object boundary from deteriorating.

At step S2110, the free viewpoint image combination unit 1702 performs hole filling processing. Specifically, the free viewpoint image combination unit 1702 supplements the portion left as a hole in the two-layer integrated image data obtained at step S2109 by using the peripheral color. In the present embodiment, the hole filling processing is performed by selecting a pixel whose distance data exhibits a larger value from among the peripheral pixels of the hole filling target pixels. For the hole filling processing, another method may be used.

At step S2111, the free viewpoint image combination unit 1702 outputs the free viewpoint image data for which the hole filling processing has been completed.

### (Free focus point image generation unit)

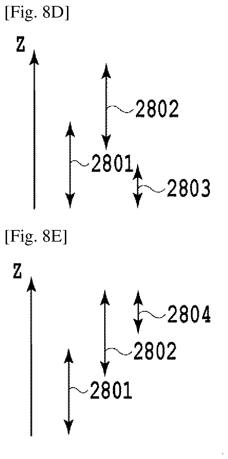

The free focus point image generation unit 314 is explained. The free focus point image generation unit 314 inputs the multidimensional information format from the encoding unit 313 via the bus 303. Here, in the case where the multidimensional information format is stored in an external memory, it is sufficient for the free focus point image generation unit 314 to read the multidimensional information format from the external memory via the external memory control unit 312. The data that is input to the free focus point image generation unit 314 and the data that is output from the free focus point image generation unit 314 are explained by using FIG. 8C, FIG. 8D, and FIG. 8E.

The free focus point image generation unit 314 of the present embodiment acquires the multi-viewpoint image data of different focus positions and the distance data of the viewpoint for which a free focus point image is generated from the input multidimensional information format. The viewpoint for which a free focus point image is generated is specified by a user operation that is input to the operation unit 307.

The free focus point image generation unit 314 generates and outputs the image data (free focus point image data) 807 whose focus position is different from that of the input multi-viewpoint image data. The output digital data is stored in the multidimensional information format in the encoding unit 313 via the bus 303. At this time, the encoding unit 313 adds the viewpoint data corresponding to the free focus point image data 807 to the management information within the multidimensional information format and further, adds the focus point data corresponding to the free focus point image data 807 in association with the viewpoint data. In the case where the multidimensional information format is stored in an external memory, it is sufficient for the free focus point image generation unit 314 to update the multidimensional information format stored in the external memory by using the generated free focus point image data 807.

FIG. 20 is a flowchart showing processing of the free focus point image generation unit 314 according to the first embodiment. In the present embodiment, explanation is given on the assumption that the free focus point image generation unit 314 is one component within the image capturing apparatus 101, but the function of the free focus point image generation unit 314 may be implemented by an external apparatus, such as a PC. That is, it is possible to implement the free focus point image generation unit 314 in the present embodiment also as one function of the image capturing apparatus or as an independent image processing apparatus.

At step S2601, the free focus point image generation unit 314 acquires multi-viewpoint image data of different focus positions and distance data. Here, the multi-viewpoint image data 709 (image data 701, 702, 703, 704), the multi-viewpoint image data 710 (image data 705, 706, 707, 708) of the focus position different from that of the multi-viewpoint image data 709, and the distance data 801 of the viewpoint for which a free focus point image is generated shown in FIG. 8C. Hereinafter, the focus position of the multi-viewpoint image data 709 is called "focus point 1" and the focus position of the multi-viewpoint image data 710 is called "focus point 2". Further, the viewpoint positions of the image data 701, 702, 703, and 704 of the multi-viewpoint image data 709 are called "viewpoint 1", "viewpoint 2", "viewpoint 3", and "viewpoint 4", respectively. Similarly, the viewpoint positions of the image data 705, 706, 707, and 708 of the multi-viewpoint image data 710 are called "viewpoint 1", "viewpoint 2", "viewpoint 3", and "viewpoint 4", respectively. Further, the image corresponding to viewpoint n and focus point m is represented as "image (viewpoint n, focus point m)".

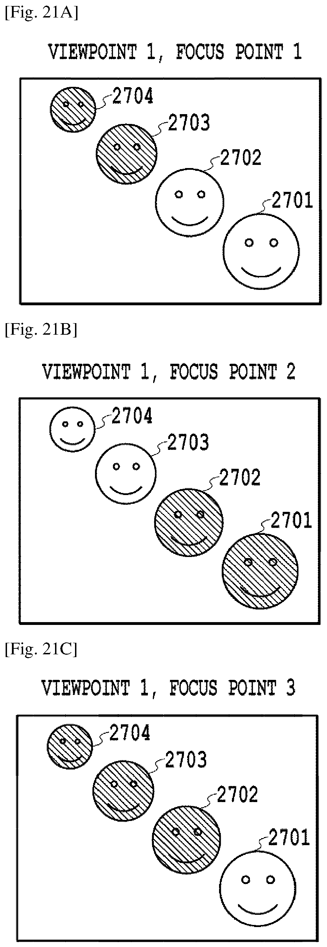

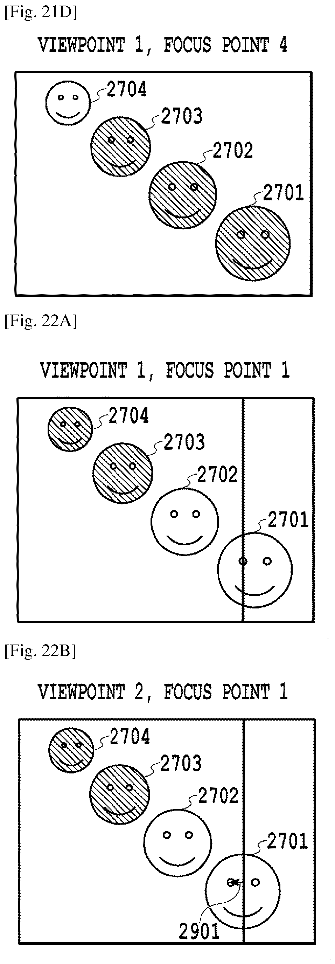

FIG. 21A to FIG. 21D are diagrams for explaining the generation processing of free focus point image data. Here, the case where a user selects "viewpoint 1" as the viewpoint for which a free focus point image is generated is taken as an example. FIG. 21A shows the image represented by the image data 701, i.e., the image (viewpoint 1, focus point 1). FIG. 21B shows the image represented by the image data 705, i.e., the image (viewpoint 1, focus point 2). In FIG. 21A, objects 2701 and 2702 are in focus and objects 2703 and 2704 are out of focus. On the contrary, in FIG. 21B, the objects 2703 and 2704 are in focus and the objects 2701 and 2702 are out of focus. FIG. 21C and FIG. 21D each show a free focus point image that is generated by processing at step S2604, to be described later.

In FIG. 8D and FIG. 8E, depths of field of the multi-viewpoint image data and the generated free focus point image are shown. The vertical axis represents the Z-direction (distance). A depth of field 2801 is a depth of field of the multi-viewpoint image data 709 including the image data 701. The position and the length in the vertical direction of a bidirectional arrow indicate the position and the range of the depth of field. A depth of field 2802 is a depth of field of the multi-viewpoint image data 710 including the image data 705. A depth of field 2803 is a depth of field of the free focus point image in which the object 2701 is in focus shown in FIG. 21C. A depth of field 2804 is a depth of field of the free focus point image in which the object 2704 is in focus shown in FIG. 21D.

Explanation is returned to the flowchart in FIG. 20.

At step S2602, the free focus point image generation unit 314 selects a subject to be brought into focus and acquires the distance to the subject. In the present embodiment, selection of a subject to be brought into focus is made by a user operation that is input to the operation unit 307. For example, it may also be possible to display a thumbnail of the images shown in FIG. 21A or FIG. 21B, and for a user to select a subject to be brought into focus from among the thumbnail by a touch operation or the like. It may also be possible to specify a subject recognized by face detection or the like as a subject to be brought into focus without a user operation. For example, in the case where a pixel within the object 2701 is specified, the free focus point image generation unit 314 acquires a representative distance value of the object 2701 from the distance data 801 of the corresponding viewpoint. The representative distance value is the median of the peripheral blocks (e.g., 3 × 3 blocks) of the specified pixel position. The method of finding a representative distance value is not limited to this and another method may be used, such as a method in which the average value of the peripheral blocks is used and a method in which the distance value of the specified pixel position is used.

Explanation is returned to the flowchart in FIG. 20.

At step S2603, the free focus point image generation unit 314 selects multi-viewpoint image data based on the distance to the subject acquired at step S2602.

Here, details of the processing at step S2603 are explained. Here, the case where multi-viewpoint image data is stored in a storage medium in accordance with the multidimensional information format (folder 1101) shown in FIG. 7B is taken as an example.

First, the free focus point image generation unit 314 refers to the management information (specifically, the multi-viewpoint data 1001) described in the management file 1102 within the folder 1101 and acquires the number of viewpoints.

Further, the free focus point image generation unit 314 acquires viewpoint data corresponding to the acquired number of viewpoints. For example, in the case where the number of viewpoints is four, the viewpoint data 1002-1 to 1002-4 is acquired.

Furthermore, the free focus point image generation unit 314 acquires the focus point data corresponding to the distance to the subject from the focus point data associated with each viewpoint data. In the present embodiment, the free focus point image generation unit 314 refers to the camera internal parameters (e.g., f-stop, AF information at the time of being brought into focus) described in the focus point data and determines whether or not the subject is included within the depth of field indicated by the camera internal parameters. Then, in the case of determining that the subject is included, the free focus point image generation unit 314 acquires the focus point data as focus point data corresponding to the distance to the subject.

Finally, the free focus point image generation unit 314 refers to the pointer to the image data described in the acquired focus point data and reads the image data from the folder 1101.

By the processing such as this, in the case where the object 2701 is specified at step S2602, the multi-viewpoint image data having the depth of field including the object 2701 is selected. Specifically, the multi-viewpoint image data 709 having the depth of field 2801 including the depth of field 2803 is selected. Further, for example, in the case where the object 2704 is specified at step S2602, the multi-viewpoint image data having the depth of field including the object 2704 is selected. Specifically, the multi-viewpoint image data 710 having the depth of field 2802 including the depth of field 2804 is selected. The selected multi-viewpoint image data is made use of in refocus processing (change processing of focus position) at step S2604.

Explanation is returned to the flowchart in FIG. 20.

At step S2604, the free focus point image generation unit 314 performs refocus processing by using the multi-viewpoint image data selected at step S2603. In the refocus processing of the present embodiment, the multi-viewpoint image is shifted and the free focus point image in which the subject selected by a user is in focus is acquired. Specifically, the refocus processing is performed by performing shift addition of the multi-viewpoint image data. The amount of shift is determined based on the distance value acquired at step S2602.

The shift addition is explained by using FIG. 22A and FIG. 22B. FIG. 22A and FIG. 22B are diagrams for explaining the shift addition. It is assumed that the image shown in FIG. 22A is the image represented by the image data 701 (image of viewpoint 1 (left-eye viewpoint)) and is the image that is taken to be a base in the shift addition. It is also assumed that the image shown in FIG. 22B is the image represented by the image data 702 (image of viewpoint 2 (right-eye viewpoint)) and is the image that is shifted in the shift addition. The distance value acquired at step S2602 corresponds to a disparity 2901 of the object 2701. In the case where it is desired to bring the object 2701 into focus, the free focus point image generation unit 314 shifts the image of viewpoint 2 (right-eye viewpoint) in the rightward direction (rightward direction in FIG. 22B) by the disparity 2901 and adds the shifted image of viewpoint 2 (right-eye viewpoint) to the image of viewpoint 1, which is a base. The wording "add an image" or the like is used, but specifically, this means to add the image data (pixel value) representing the image. In the case where the disparity 2901 is in the opposite direction, it is sufficient to shift the image of viewpoint 2 (right-eye point) in the leftward direction (leftward direction in FIG. 22B) by the disparity 2901. The free focus point image generation unit 314 performs the same processing by taking the image of viewpoint 1 to be a base and the image of another viewpoint (viewpoint 3, viewpoint 4) to be the image that is shifted. By integrating the image data 701 that is taken to be a base and the three shifted pieces of image data 702, 703, and 704 in this manner, the free focus point image data 807 in which the object 2701 is in focus is generated.

In the case where the object 2701 is specified at step S2602, the image (shown in FIG. 21C) represented by the free focus point image data 807 generated at step S2604 is the image in which only the object 2701 is in focus and the objects 2702, 2703, and 2704 are out of focus. Further, the range of the depth of field (the depth of field 2803 shown in FIG. 8D) of the image is narrower than the range of the depth of field 2801 of the multi-viewpoint image data 709 as shown in FIG. 8D. That is, the image is an image whose depth of field is shallower than that of the image represented by the multi-viewpoint image data 709.

Further, in the case where the object 2704 is specified at step S2602, the image (image shown in FIG. 21D) represented by the free focus point image data 807 generated at step S2604 is the image in which only the object 2704 is in focus and the objects 2701, 2702, and 2703 are out of focus. The range of the depth of field (the depth of field 2804 shown in FIG. 8E) of the image is narrower than the range of the depth of field 2802 of the multi-viewpoint image data 710 as shown in FIG. 8E. That is, the image is an image whose depth of field is shallower than that of the image represented by the multi-viewpoint image data 710.

At step S2605, the free focus point image generation unit 314 outputs the generated free focus point image data 807.

As explained above, in the present embodiment, the data recording apparatus (corresponding to the encoding unit 313, the additional information generation unit 316, the free viewpoint image generation unit 315, and the free focus point image generation unit 314 shown in FIG. 5) associates the image data of a plurality of focus positions, the image data of a plurality of viewpoint positions, the distance data, and the area division data with one another and stores them in the storage medium in accordance with the predetermined format. Due to this, it is made possible to make use of the image data obtained by performing image capturing using a camera array or a plenoptic camera for more purposes of use. For example, it is possible to make use of the image data in image processing, such as processing to change the viewpoint position after image capturing. Further, it is possible to make use of the image data in refocus processing, such as processing to adjust the focus position after image capturing and processing to control the depth of field.

Furthermore, in the present embodiment, the image data generated by the free focus point image generation unit 314 and the free viewpoint image generation unit 315 is stored in the multidimensional information format. Due to this, by making use of the multidimensional information format according to the present embodiment, it is made possible to use not only the captured image data but also the image data generated from the captured image data in image processing.

Furthermore, by using the format in the present embodiment, the image data, the distance data, and the area division data are recorded in association with one another, and therefore, it is made easy to access the data. That is, it is made possible to quickly perform image processing that makes use of the data.

### [Second embodiment]

In the first embodiment, the distance data of the base viewpoint is made use of for free focus point image generation. That is, in the first embodiment, the distance data is made use of as the amount of shift of the refocus processing. In the present embodiment, the distance data of the base viewpoint and the area division data are made use of for free focus point image generation. Due to this, the refocus processing to bring each object into focus is implemented. In the following, explanation of the portions in common to those of the first embodiment is omitted and the processing in the free focus point image generation unit 314, which is a different point, is explained mainly.

The free focus point image generation unit 314 of the present embodiment further inputs the area division data in addition to the multi-viewpoint image data of different focus positions and the distance data of the viewpoint for which a free focus point image is generated.

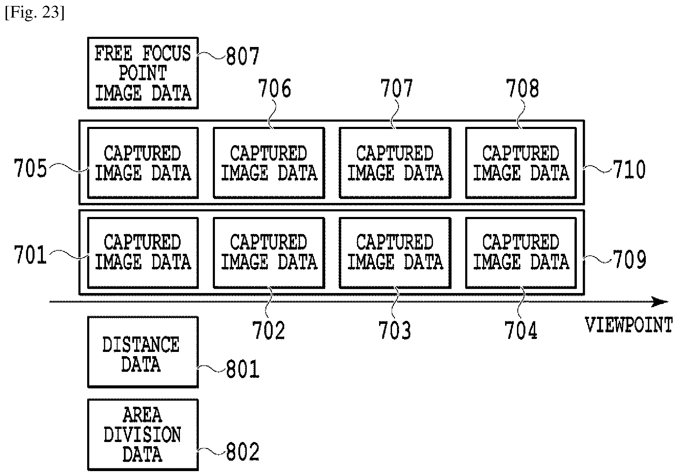

The free focus point image generation unit 314 of the present embodiment is the same as that of the first embodiment and generates and outputs the free focus point image data 807 of the focus position different from that of the input multi-viewpoint image data. The output digital data is stored in the multidimensional information format in the encoding unit 313 via the bus 303. FIG. 23 is a diagram schematically showing data that is input and output by the free focus point image generation unit 314 according to the second embodiment.

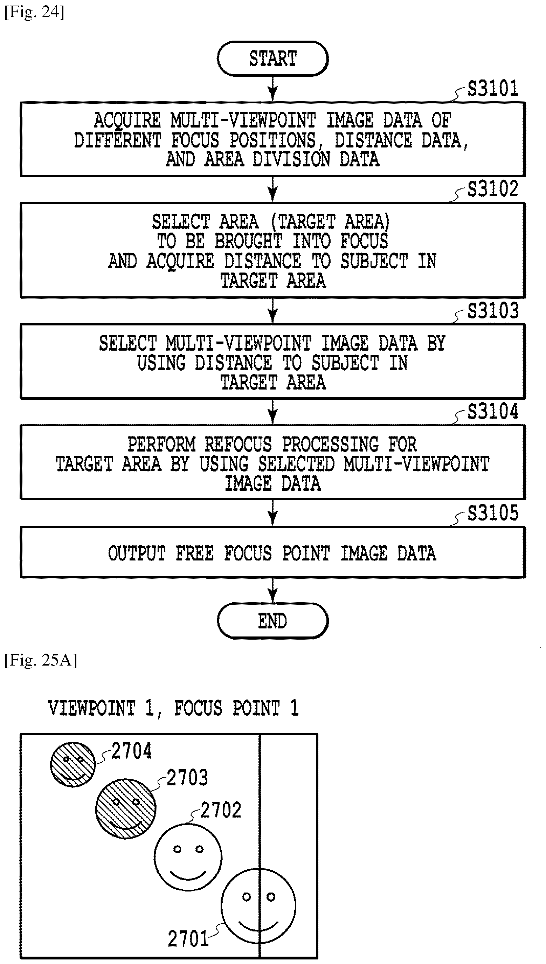

FIG. 24 is a flowchart showing processing of the free focus point image generation unit 314 according to the second embodiment. Here, the case where a user selects "viewpoint 1" as a viewpoint for which a free focus point image is generated is taken as an example.

At step S3101, the free focus point image generation unit 314 acquires the multi-viewpoint image data of the different focus positions, the distance data, and the area division data. As shown in FIG. 23, here, in addition to the multi-viewpoint image data 709, the multi-viewpoint image data 710 of the focus position different from that of the multi-viewpoint image data 709, and the distance data 801 of the viewpoint for which a free focus point image is generated shown in FIG. 8C, the area division data 802 is input.

At step S3102, the free focus point image generation unit 314 acquires an area (target area) to be brought into focus and the distance to a subject in the target area. In the present embodiment, it is assumed that selection of the target area to be brought into focus is made by a user operation that is input to the operation unit 307. For example, it may also be possible to display a thumbnail of the images shown in FIG. 21A or FIG.21B on the display unit 309, and for a user to select a target area to be brought into focus from among the thumbnail by a touch operation or the like. It may also be possible to specify a target area recognized by face detection or the like as an area to be brought into focus. For example, in the case where the object 2701 shown in FIG. 21A or FIG. 21B is selected as the target area, the free focus point image generation unit 314 acquires the distance value of each pixel in the target area from the distance data 801. Further, in the case where the object 2704 is selected as the target area, the free focus point image generation unit 314 acquires the distance value of each pixel in the target area from the distance data 801.

Explanation is returned to the flowchart in FIG. 24.

At step S3103, the free focus point image generation unit 314 selects multi-viewpoint image data based on the distance to the subject in the target area selected at step S3102. The selection processing of multi-viewpoint image data at step S3103 is the same as the processing at step S2603, and therefore, detailed explanation is omitted. The selected multi-viewpoint image data is made use of in refocus processing (change processing of the focus position) at step S3104. In the case where the object 2701 is specified at step S3102, the multi-viewpoint image data 709 having the depth of field (in the example shown in FIG. 8D, the depth of field 2801) including the object 2701 is selected. In the case where the object 2704 is specified at step S3102, the multi-viewpoint image data 710 having the depth of field (in the example shown in FIG. 8E, the depth of field 2802) including the object 2704 is selected.

Explanation is returned to the flowchart in FIG. 24.

At step S3104, the free focus point image generation unit 314 performs refocus processing by using the multi-viewpoint image data selected at step S3103. In the refocus processing of the present embodiment, the multi-viewpoint image data is shifted and the free focus point image in which the target area (object) selected by a user is in focus is acquired. Specifically, by performing shift addition of the multi-viewpoint image data, the refocus processing is performed. The amount of shift at this time is determined based on the distance value of the target area acquired at step S3102.

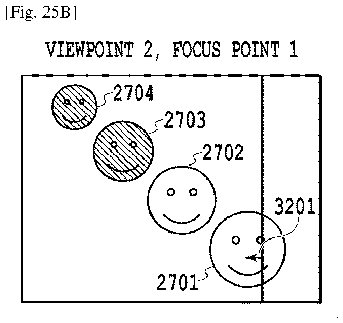

The shift addition is explained by using FIG. 22A and FIG. 22B, and FIG. 25A and FIG. 25B. FIG. 25A and FIG. 25B are diagrams for explaining the shift addition according to the second embodiment. Similar to the image shown in FIG. 22A, it is assumed that the image shown in FIG. 25A is the image (image of viewpoint 1 (left-eye viewpoint)) represented by the image data 701 and is the image that is taken to be a base in the shift addition. Similar to the image shown in FIG. 22B, it is assumed that the image shown in FIG. 25A is the image (image of viewpoint 2 (right-eye viewpoint)) represented by the image data 702 and is the image that is shifted in the shift addition. Of the distance values acquired at step S3102, the distance value in the area of the nose of the object 2701 corresponds to a disparity 3201.

Here, in the case where the disparity 2901 and the disparity 3201 have different amounts of disparity, by the refocus processing method in the first embodiment, in the case where the shift addition is performed based on the disparity 2901, the eyes of the object 2701 are brought into focus and the nose of the object 2701 is not brought into focus. In the case where the shift addition is performed based on the disparity 3201, the nose of the object 2701 is brought into focus and the eyes of the object 2701 are not brought into focus.

That is, in the case where it is desired to bring the whole of the object 2701 into focus, it is necessary to perform the addition by changing the amount of shift. In the case where it is desired to bring the object 2701 into focus, the image of viewpoint 2 (right viewpoint) is shifted in the rightward direction (rightward direction in FIG. 25B) in such a manner that the area of the eyes is shifted by the disparity 2901 and the area of the nose is shifted by the disparity 3201, and then, the shifted image is added to the image of viewpoint 1, which is a base. In the case where the disparity is in the opposite direction, it is sufficient to shift the image of viewpoint 2 (right viewpoint) in the leftward direction (leftward direction in FIG. 25B) in such a manner that the area of the eyes is shifted by the disparity 2901 and the area of the nose is shifted by the disparity 3201. As to the area other than the object 2701, the area is shifted by a representative disparity for example, the area is shifted by the disparity 2901 of the area of the eyes.

The free focus point image generation unit 314 performs the same processing by taking the image of viewpoint 1 to be a base and the image of another viewpoint (viewpoint 3, viewpoint 4) to be the image that is shifted. By integrating the image data 701 that is a base and the three shifted pieces of the image data 702, 703, and 704 in this manner, the free focus point image data 807 in which the object 2701 is in focus is generated.

The subsequent processing is the same as that of the first embodiment.

In the present embodiment, in order to simplify explanation, the amount of shift of the area of the eyes is made to differ from that of the area of the nose within the object 2701 in the refocus processing, but actually, as to the area other than those of the eyes and the nose within the object 2701, the refocus processing is performed by making the amounts of shift to differ from one another.

As above, in the present embodiment, in the free focus point image generation after image capturing, the refocus processing is performed by using not only the distance data of the base viewpoint but also the area division data of the base viewpoint. Due to this, not only the same effect as that of the first embodiment is obtained but also it is made possible to appropriately bring the object specified by a user into focus for the image data obtained by performing image capturing using a camera array or a plenoptic camera.

### [Other Embodiments]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. A data recording apparatus comprising:
an input unit (313) configured to input an image data group including at least:
image data obtained by performing image capturing at a first focus position from a first viewpoint;
image data obtained by performing image capturing at a second focus position different from the first focus position from the first viewpoint; and
image data obtained by performing image capturing at the first focus position from a second viewpoint different from the first viewpoint; and
a recording unit (313) configured to record management information and the image data group,
**characterized in that**
the recording unit (313) is configured to generate the management information, which associates each piece of image data of the image data group that is input by the input unit, and which includes information indicating a viewpoint which is related with information indicating a focus position and the information indicating the focus position which includes a pointer for accessing the image data, and to record the generated management information and the image data group in a storage medium in accordance with a predetermined format, wherein
the management information is information storing image data reference information for accessing image data, viewpoint information indicating a viewpoint of the image data, and focus point information indicating a focus position of the image data in association with one another for each piece of the image data, and
the input unit (313) is configured to input area division data corresponding to the first viewpoint, which is generated by dividing the image data of the first viewpoint for each object, and
the recording unit (313) is configured to store area division data reference information for accessing the area division data that is input by the input unit in the management information in association with the viewpoint information corresponding to the first viewpoint, and
the input unit (313) is further configured to input distance data between the first viewpoint and each object, and
the recording unit (313) is further configured to store distance data reference information for accessing the distance data that is input by the input unit in the management information in association with the viewpoint information corresponding to the first viewpoint.

2. The data recording apparatus according to claim 1, wherein
the input unit (313) is configured to input free viewpoint image data of a third viewpoint whose focus position is the first focus position and which is generated by using at least image data obtained by performing image capturing at the first focus position from the first viewpoint and image data obtained by performing image capturing at the first focus position from the second viewpoint,
the third viewpoint is a viewpoint different from the first viewpoint and the second viewpoint, and
the recording unit (313) is configured to generate the viewpoint information corresponding to the third viewpoint and store the viewpoint information in the management information, and store image data reference information for accessing the free viewpoint image data in the management information in association with the viewpoint information corresponding to the third viewpoint and the focus point information corresponding to the first focus position.

3. The data recording apparatus according to any one of claims 1 or 2, wherein
the input unit (313) is configured to input free focus point image data of the first viewpoint whose focus position is a third focus position and which is generated by using at least image data obtained by performing image capturing at the first focus position from the first viewpoint and image data obtained by performing image capturing at the second focus position from the first viewpoint,
the third focus position is a focus position different from the first focus position and the second focus position, and
the recording unit (313) is configured to generate the focus point information corresponding to the third focus position and store the focus point information in the management information, and store image data reference information for accessing the free focus point image data in the management information in association with the viewpoint information corresponding to the first viewpoint and the focus point information corresponding to the third focus position.

4. The data recording apparatus according to any one of claims 1 to 3, wherein
the input unit (313) is configured to input distance data between the first viewpoint generated from image data obtained by performing image capturing at the first focus position and the subject, and distance data between the first viewpoint generated from image data obtained by performing image capturing at the second focus position and the subject, and
the recording unit (313) is configured to integrate a plurality of pieces of the distance data between the first viewpoint and the subject and store distance data reference information for accessing the integrated distance data in the management information in association with the viewpoint information corresponding to the first viewpoint.

5. An image capturing apparatus comprising:
an image capturing unit capable of capturing a plurality of images of different focus positions and different viewpoints; and
the data recording apparatus according to any one of claims 1 to 4.

6. A data recording method comprising:
an input step of inputting an image data group including at least:
image data obtained by performing image capturing at a first focus position from a first viewpoint;
image data obtained by performing image capturing at a second focus position different from the first focus position from the first viewpoint; and
image data obtained by performing image capturing at the first focus position from a second viewpoint different from the first viewpoint; and
a recording step of recording management information and the image data group,
**characterized in that**
the recording step comprises generating the management information, which associates each piece of image data of the input image data group, and which includes information indicating a viewpoint which is related with information indicating a focus position and the information indicating the focus position which includes a pointer for accessing the image data, and recording the generated management information and the image data group in a storage medium in accordance with a predetermined format, wherein
the management information is information storing image data reference information for accessing image data, viewpoint information indicating a viewpoint of the image data, and focus point information indicating a focus position of the image data in association with one another for each piece of the image data,
the input step further comprises inputting area division data corresponding to the first viewpoint, which is generated by dividing the image data of the first viewpoint for each object, and
the recording step further comprises storing area division data reference information for accessing the input area division data in the management information in association with the viewpoint information corresponding to the first viewpoint, and
the input step further comprises inputting distance data between the first viewpoint and each object, and
the recording step further comprises storing distance data reference information for accessing the distance data in the management information in association with the viewpoint information corresponding to the first viewpoint.

7. A program comprising instructions to cause the apparatus according to anyone of claims 1 to 5 to execute the steps of the method of claim 6.

## Patentansprüche

1. Datenaufzeichnungsvorrichtung, mit:
einer Eingabeeinheit (313), die konfiguriert ist, um eine Bilddatengruppe einzugeben, die zumindest umfasst:
Bilddaten, die durch Durchführen einer Bilderfassung an einer ersten Fokusposition von einem ersten Blickpunkt aus erhalten werden;
Bilddaten, die durch Durchführen einer Bilderfassung an einer zweiten Fokusposition, die sich von der ersten Fokusposition von dem ersten Blickpunkt unterscheidet, aus erhalten werden; und
Bilddaten, die durch Durchführen einer Bilderfassung an der ersten Fokusposition von einem zweiten, von dem ersten Blickpunkt verschiedenen Blickpunkt, aus erhalten werden; und
einer Aufzeichnungseinheit (313), die konfiguriert ist, um Verwaltungsinformationen und die Bilddatengruppe aufzuzeichnen,
**dadurch gekennzeichnet, dass**
die Aufzeichnungseinheit (313) konfiguriert ist, um die Verwaltungsinformationen zu erzeugen, die jedem durch die Eingabeeinheit eingegebenen Bilddatenteil der Bilddatengruppe zugeordnet sind und die Informationen, die einen Blickpunkt angeben, der sich auf Informationen bezieht, die eine Fokusposition angeben, und die Informationen, die die Fokusposition angeben, einen Zeiger zum Zugreifen auf die Bilddaten umfassen, umfassen, und um die erzeugten Verwaltungsinformationen und die Bilddatengruppe in einem Speichermedium gemäß einem vorbestimmten Format aufzuzeichnen, wobei
die Verwaltungsinformationen Informationen sind, die Bilddatenreferenzinformationen für den Zugriff auf Bilddaten, Blickpunktinformationen, die einen Blickpunkt der Bilddaten angeben, und Fokuspunktinformationen, die eine Fokusposition der Bilddaten angeben, verknüpft mit einander für jedes Bilddatenteil speichern, und
die Eingabeeinheit (313) konfiguriert ist, um Flächenaufteilungsdaten einzugeben, die dem ersten Blickpunkt entsprechen, der durch Teilen der Bilddaten des ersten Blickpunkts für jedes Objekt erzeugt wird, und
die Aufzeichnungseinheit (313) konfiguriert ist, um Flächenaufteilungsdatenreferenzinformationen für den Zugriff auf die von der Eingabeeinheit eingegebenen Flächenaufteilungsdaten in die Verwaltungsinformationen in Verknüpfung mit den dem ersten Blickpunkt entsprechenden Blickpunktinformationen zu speichern, und
die Eingabeeinheit (313) weiterhin konfiguriert ist, um Distanzdaten zwischen dem ersten Blickpunkt und jedem Objekt einzugeben, und
die Aufzeichnungseinheit (313) weiterhin konfiguriert ist, um Distanzdatenreferenzinformationen für den Zugriff auf die Distanzdaten zu speichern, die durch die Eingabeeinheit in die Verwaltungsinformationen in Verknüpfung mit den Blickpunktinformationen, die dem ersten Blickpunkt entsprechen, eingegeben werden.

2. Datenaufzeichnungsvorrichtung gemäß Anspruch 1, wobei
die Eingabeeinheit (313) konfiguriert ist, um freie Blickpunktbilddaten eines dritten Blickpunkts einzugeben, dessen Fokusposition die erste Fokusposition ist und der unter Verwendung von zumindest Bilddaten, die durch Durchführen einer Bilderfassung an der ersten Fokusposition vom ersten Blickpunkt erhalten werden, und Bilddaten, die durch Durchführen einer Bilderfassung an der ersten Fokusposition vom zweiten Blickpunkt erhalten werden, erzeugt wird,
der dritte Blickpunkt ein Blickpunkt ist, der sich von dem ersten Blickpunkt und dem zweiten Blickpunkt unterscheidet, und
die Aufzeichnungseinheit (313) konfiguriert ist, um die dem dritten Blickpunkt entsprechenden Blickpunktinformationen zu erzeugen und die Blickpunktinformationen in den Verwaltungsinformationen zu speichern, und um Bilddatenreferenzinformationen für den Zugriff auf die Bilddaten des freien Blickpunkts in den Verwaltungsinformationen zu speichern, verknüpft mit den dem dritten Blickpunkt entsprechenden Blickpunktinformationen und den der ersten Fokusposition entsprechenden Fokuspunktinformationen.

3. Datenaufzeichnungsvorrichtung gemäß einem der Ansprüche 1 oder 2, wobei
die Eingabeeinheit (313) konfiguriert ist, um freie Fokuspunktbilddaten des ersten Fokuspunkts einzugeben, dessen Fokusposition eine dritte Fokusposition ist und der unter Verwendung von zumindest Bilddaten, die durch Durchführen einer Bilderfassung an der ersten Fokusposition von dem ersten Fokuspunkt erhalten werden, und Bilddaten, die durch Durchführen einer Bilderfassung an der zweiten Fokusposition von dem ersten Fokuspunkt erhalten werden, erzeugt wird,
die dritte Fokusposition eine Fokusposition ist, die sich von der ersten Fokusposition und der zweiten Fokusposition unterscheidet, und
die dritte Fokusposition eine Fokusposition ist, die sich von der ersten Fokusposition und der zweiten Fokusposition unterscheidet, und
die Aufzeichnungseinheit (313) konfiguriert ist, um die Fokuspunktinformationen entsprechend der dritten Fokusposition zu erzeugen und die Fokuspunktinformationen in den Verwaltungsinformationen zu speichern und um Bilddatenreferenzinformationen für den Zugriff auf die freien Fokuspunktbilddaten in den Verwaltungsinformationen in Verknüpfung mit den Fokuspunktinformationen entsprechend dem ersten Fokuspunkt und den Fokuspunktinformationen entsprechend der dritten Fokusposition zu speichern.

4. Datenaufzeichnungsvorrichtung gemäß einem der Ansprüche 1 bis 3, wobei
die Eingabeeinheit (313) konfiguriert ist, um Distanzdaten zwischen dem ersten Blickpunkt, der aus Bilddaten erzeugt wird, die durch Durchführen einer Bilderfassung an der ersten Fokusposition erhalten werden, und dem Objekt einzugeben, und Distanzdaten zwischen dem ersten Blickpunkt, der aus Bilddaten erzeugt wird, die durch Durchführen einer Bilderfassung an der zweiten Fokusposition erhalten werden, und dem Objekt, und
die Aufzeichnungseinheit (313) konfiguriert ist, um eine Vielzahl von Distanzdatenteilen zwischen dem ersten Blickpunkt und dem Objekt zu integrieren und Distanzdatenreferenzinformationen für den Zugriff auf die integrierten Distanzdaten in den Verwaltungsinformationen verknüpft mit den Blickpunktinformationen entsprechend dem ersten Blickpunkt zu speichern.

5. Bildaufnahmevorrichtung, mit
einer Bildaufnahmeeinheit, die in der Lage ist, eine Vielzahl von Bildern mit unterschiedlichen Fokuspositionen und unterschiedlichen Blickpunkten aufzunehmen; und
der Datenaufzeichnungsvorrichtung gemäß einem der Ansprüche 1 bis 4.

6. Datenaufzeichnungsverfahren, mit:
einem Eingabeschritt zum Eingeben einer Bilddatengruppe, die mindestens umfasst:
Bilddaten, die durch Durchführen einer Bilderfassung an einer ersten Fokusposition von einem ersten Blickpunkt aus erhalten werden;
Bilddaten, die durch Durchführen einer Bilderfassung an einer zweiten Fokusposition, die sich von der ersten Fokusposition aus dem ersten Blickpunkt unterscheidet, aus erhalten werden; und
Bilddaten, die durch Durchführen einer Bilderfassung an der ersten Fokusposition von einem zweiten, von dem ersten Blickpunkt verschiedenen Blickpunkt, aus erhalten werden; und
einem Aufzeichnungsschritt zum Aufzeichnen von Verwaltungsinformationen und der Bilddatengruppe,
**dadurch gekennzeichnet, dass**
der Aufzeichnungsschritt das Erzeugen der Verwaltungsinformationen aufweist, die jedes Bilddatenteil mit der eingegebenen Bilddatengruppe verknüpfen und die Informationen umfassen, die einen Blickpunkt angeben, der sich auf Informationen bezieht, die eine Fokusposition angeben, und die Informationen, die die Fokusposition angeben, einen Zeiger zum Zugreifen auf die Bilddaten umfassen, und das Aufzeichnen der erzeugten Verwaltungsinformationen und der Bilddatengruppe in einem Speichermedium gemäß einem vorbestimmten Format, wobei
die Verwaltungsinformationen Informationen sind, die Bilddatenreferenzinformationen für den Zugriff auf Bilddaten, Ansichtspunktinformationen, die einen Ansichtspunkt der Bilddaten angeben, und Fokuspunktinformationen, die eine Fokusposition der Bilddaten verknüpft mit einander für jedes Stück der Bilddaten angeben, speichern,
der Eingabeschritt weiterhin das Eingeben von Flächenaufteilungsdaten aufweist, die dem ersten Blickpunkt entsprechen, der durch Aufteilen der Bilddaten des ersten Blickpunkts für jedes Objekt erzeugt wird, und
der Aufzeichnungsschritt weiterhin das Speichern von Flächenaufteilungsdatenreferenzinformationen für den Zugriff auf die eingegebenen Flächenaufteilungsdaten in den Verwaltungsinformationen in Verknüpfung mit den dem ersten Blickpunkt entsprechenden Blickpunktinformationen aufweist, und
der Eingabeschritt weiterhin das Eingeben von Distanzdaten zwischen dem ersten Blickpunkt und jedem Objekt aufweist, und
der Aufzeichnungsschritt weiterhin das Speichern von DistanzdatenReferenzinformationen für den Zugriff auf die durch die Eingabeeinheit eingegebenen Distanzdaten in den Verwaltungsinformationen in Verknüpfung mit den dem ersten Blickpunkt entsprechenden Blickpunktinformationen aufweist.

7. Programm, das Anweisungen aufweist, um die Vorrichtung gemäß einem der Ansprüche 1 bis 5 zu veranlassen, die Schritte des Verfahrens gemäß Anspruch 6 auszuführen.

## Revendications

1. Appareil d'enregistrement de données comprenant :
une unité d'entrée (313) configurée pour entrer un groupe de données d'image comportant au moins :
des données d'image obtenues en effectuant une capture d'image à une première position de focalisation à partir d'un premier point de vue ;
des données d'image obtenues en effectuant une capture d'image à une deuxième position de focalisation différente de la première position de focalisation à partir du premier point de vue ; et
des données d'image obtenues en effectuant une capture d'image à la première position de focalisation à partir d'un deuxième point de vue différent du premier point de vue ; et
une unité d'enregistrement (313) configurée pour enregistrer des informations de gestion et le groupe de données d'image,
**caractérisé en ce que**
l'unité d'enregistrement (313) est configurée pour générer les informations de gestion, qui associent chaque élément de données d'image du groupe de données d'image qui est entré par l'unité d'entrée, et qui comportent des informations indiquant un point de vue qui est lié à des informations indiquant une position de focalisation et des informations indiquant la position de focalisation qui comportent un pointeur pour accéder aux données d'image, et pour enregistrer les informations de gestion générées et le groupe de données d'image dans un support de stockage conformément à un format prédéterminé, dans lequel
les informations de gestion sont des informations stockant des informations de référence de données d'image pour accéder à des données d'image, des informations de point de vue indiquant un point de vue des données d'image, et des informations de point de focalisation indiquant une position de focalisation des données d'image en association les unes avec les autres pour chaque élément des données d'image, et
l'unité d'entrée (313) est configurée pour entrer des données de division de zone correspondant au premier point de vue, qui sont générées en divisant les données d'image du premier point de vue pour chaque objet, et
l'unité d'enregistrement (313) est configurée pour stocker des informations de référence de données de division de zone pour accéder aux données de division de zone qui sont entrées par l'unité d'entrée dans les informations de gestion en association avec les informations de point de vue correspondant au premier point de vue, et
l'unité d'entrée (313) est en outre configurée pour entrer des données de distance entre le premier point de vue et chaque objet, et
l'unité d'enregistrement (313) est en outre configurée pour stocker des informations de référence de données de distance pour accéder aux données de distance qui sont entrées par l'unité d'entrée dans les informations de gestion en association avec les informations de point de vue correspondant au premier point de vue.

2. Appareil d'enregistrement de données selon la revendication 1, dans lequel
l'unité d'entrée (313) est configurée pour entrer des données d'image de point de vue libre d'un troisième point de vue dont la position de focalisation est la première position de focalisation et qui sont générées en utilisant au moins des données d'image obtenues en effectuant une capture d'image à la première position de focalisation à partir du premier point de vue et des données d'image obtenues en effectuant une capture d'image à la première position de focalisation à partir du deuxième point de vue,
le troisième point de vue est un point de vue différent du premier point de vue et du deuxième point de vue, et
l'unité d'enregistrement (313) est configurée pour générer les informations de point de vue correspondant au troisième point de vue et stocker les informations de point de vue dans les informations de gestion, et stocker des informations de référence de données d'image pour accéder aux données d'image de point de vue libre dans les informations de gestion en association avec les informations de point de vue correspondant au troisième point de vue et les informations de point de focalisation correspondant à la première position de focalisation.

3. Appareil d'enregistrement de données selon l'une quelconque des revendications 1 ou 2, dans lequel
l'unité d'entrée (313) est configurée pour entrer des données d'image de point de focalisation libre du premier point de vue dont la position de focalisation est une troisième position de focalisation et qui sont générées en utilisant au moins des données d'image obtenues en effectuant une capture d'image à la première position de focalisation à partir du premier point de vue et des données d'image obtenues en effectuant une capture d'image à la deuxième position de focalisation à partir du premier point de vue,
la troisième position de focalisation est une position de focalisation différente de la première position de focalisation et de la deuxième position de focalisation, et
l'unité d'enregistrement (313) est configurée pour générer les informations de point de focalisation correspondant à la troisième position de focalisation et stocker les informations de point de focalisation dans les informations de gestion, et stocker des informations de référence de données d'image pour accéder aux données d'image de point de focalisation libre dans les informations de gestion en association avec les informations de point de vue correspondant au premier point de vue et les informations de point de focalisation correspondant à la troisième position de focalisation.

4. Appareil d'enregistrement de données selon l'une quelconque des revendications 1 à 3,
dans lequel
l'unité d'entrée (313) est configurée pour entrer des données de distance entre le premier point de vue générées à partir de données d'image obtenues en effectuant une capture d'image à la première position de focalisation et le sujet, et des données de distance entre le premier point de vue générées à partir de données d'image obtenues en effectuant une capture d'image à la deuxième position de focalisation et le sujet, et
l'unité d'enregistrement (313) est configurée pour intégrer une pluralité d'éléments des données de distance entre le premier point de vue et le sujet et stocker des informations de référence de données de distance pour accéder aux données de distance intégrées dans les informations de gestion en association avec les informations de point de vue correspondant au premier point de vue.

5. Appareil de capture d'images comprenant :
une unité de capture d'images capable de capturer une pluralité d'images de différentes positions de focalisation et de différents points de vue ; et
l'appareil d'enregistrement de données selon l'une quelconque des revendications 1 à 4.

6. Procédé d'enregistrement de données comprenant :
une étape d'entrée consistant à entrer un groupe de données d'image comportant au moins :
des données d'image obtenues en effectuant une capture d'image à une première position de focalisation à partir d'un premier point de vue ;
des données d'image obtenues en effectuant une capture d'image à une deuxième position de focalisation différente de la première position de focalisation à partir du premier point de vue ; et
des données d'image obtenues en effectuant une capture d'image à la première position de focalisation à partir d'un deuxième point de vue différent du premier point de vue ; et
une étape d'enregistrement consistant à enregistrer des informations de gestion et le groupe de données d'image,
**caractérisé en ce que**
l'étape d'enregistrement comprend la génération des informations de gestion, qui associent chaque élément de données d'image du groupe de données d'image d'entrée, et qui comportent des informations indiquant un point de vue qui est lié à des informations indiquant une position de focalisation et des informations indiquant la position de focalisation qui comportent un pointeur pour accéder aux données d'image, et l'enregistrement des informations de gestion générées et du groupe de données d'image dans un support de stockage conformément à un format prédéterminé, dans lequel
les informations de gestion sont des informations stockant des informations de référence de données d'image pour accéder à des données d'image, des informations de point de vue indiquant un point de vue des données d'image, et des informations de point de focalisation indiquant une position de focalisation des données d'image en association les unes avec les autres pour chaque élément des données d'image,
l'étape d'entrée comprend en outre l'entrée de données de division de zone correspondant au premier point de vue, qui sont générées en divisant les données d'image du premier point de vue pour chaque objet, et
l'étape d'enregistrement comprend le stockage d'informations de référence de données de division de zone pour accéder aux données de division de zone d'entrée dans les informations de gestion en association avec les informations de point de vue correspondant au premier point de vue, et
l'étape d'entrée comprend en outre l'entrée de données de distance entre le premier point de vue et chaque objet, et
l'étape d'enregistrement comprend en outre le stockage d'informations de référence de données de distance pour accéder aux données de distance dans les informations de gestion en association avec les informations de point de vue correspondant au premier point de vue.

7. Programme comprenant des instructions pour amener l'appareil selon l'une quelconque des revendications 1 à 5 à exécuter les étapes du procédé selon la revendication 6.
